# EUROPEAN PATENT SPECIFICATION

(11) **EP 4 409 932 B1**
(45) Date of publication and mention of the grant of the patent: **02.09.2026**
(21) Application number: 22797589.3
(22) Date of filing: 28.09.2022
(51) Int. Cl.: H04R 27/00

(54) **METHOD FOR CHANGING A STATE OF A PLAYBACK DEVICE**
METHODE ZUM ÄNDERN DES ZUSTANDS EINES WIEDERGABEGERÄTS
MÉTHODE POUR MODIFIER L'ÉTAT D'UN PÉRIPHÉRIQUE DE LECTURE

(30) Priority: 30.09.2021 US 202163261876 P; 30.09.2021 US 202163261881 P
(43) Date of publication of application: 07.08.2024
(73) Proprietor: Sonos, Inc., Goleta, CA 93117 (US)
(72) Inventor: NESFIELD, James, Santa Barbara, CA 93101 (US); FRANK, Ian Ward, Santa Barbara, CA 93101 (US); SOTO, Kurt Thomas, Santa Barbara, CA 93101 (US); JONES, Daniel, Santa Barbara, CA 93101 (US); SLEITH, Charles Conor, Santa Barbara, CA 93101 (US); TODD, Joseph, Santa Barbara, CA 93101 (US)
(74) Representative: EIP
(86) International application number: PCT/US2022/077185
(87) International publication number: WO 2023/056299

(56) References cited:
- US-A1- 2012 148 075
- US-A1- 2017 094 437
- US-A1- 2017 242 653
- US-A1- 2020 382 836
- US-A1- 2021 136 509

## Description

The present technology relates to consumer goods and, more particularly, to methods, systems, products, features, services, and other elements directed to voice-controllable media playback systems or some aspect thereof.

### BACKGROUND

Options for accessing and listening to digital audio in an out-loud setting were limited until in 2003, when SONOS, Inc. filed for one of its first patent applications, entitled "Method for Synchronizing Audio Playback between Multiple Networked Devices," and began offering a media playback system for sale in 2005. The SONOS Wireless HiFi System enables people to experience music from many sources via one or more networked playback devices. Through a software control application installed on a smartphone, tablet, or computer, one can play what he or she wants in any room that has a networked playback device. Additionally, using a controller, for example, different songs can be streamed to each room that has a playback device, rooms can be grouped together for synchronous playback, or the same song can be heard in all rooms synchronously.

Given the ever-growing interest in digital media, there continues to be a need to develop consumer-accessible technologies to further enhance the listening experience.

US 2017/094437 A1 describes spatial mapping of two or more audio playback devices in a listening environment. Two or more playback devices may signal each other. Based on the signaling, a position of the two or more playback devices relative to each other is determined and a device map of the two or more playback devices in the listening environment is generated based on this position.

US 2020/382836 A1 describes facilitating playback in a media playback system that includes a first media device and a second media device. One or more first network performance metrics corresponding to a network interface of the first media device are compared to one or more second network performance metrics corresponding to a network interface of the second media device. The comparison indicates that the first media device has a better network connection than the second media device. Based on the comparison, the first media device is configured to forward data indicating audio content from a network source to the second media device to facilitate playback of the audio content by the second media device.

US 2021/136509 A1 describes a method involving receiving a first position of a first playback device relative to a user, and receiving a second position of a second playback device relative to the user. Location data corresponding to the first and second positions is transmitted to a media content provider, and virtual media audio content associated with a virtual environment is received. The virtual media audio content comprises first and second audio signals generated based on the transmitted location data, wherein the generated first and second audio signals include one or more audio cues configured to enable the user to spatially perceive a location of a virtual object within the listening environment. The first audio signal is then played back via the first playback device in synchrony with playing back the second audio signal via the second playback device.

US 2017/242653 Al describes voice control and related features and functionality for media playback devices such as designating and managing default networked devices, audio response playback, room-corrected voice detection, content mixing, music service selection, metadata exchange between networked playback systems and networked microphone systems, handling loss of pairing between networked devices, actions based on user identification, and other voice control of networked devices.

### SUMMARY

Aspects of the invention are defined by the appended independent claims.

### BRIEF DESCRIPTION OF THE DRAWINGS

Features, aspects, and advantages of the presently disclosed technology may be better understood with regard to the following description, appended claims, and accompanying drawings where:
Figure 1A is a partial cutaway view of an environment having a media playback system configured in accordance with aspects of the disclosed technology;
Figure 1B is a schematic diagram of the media playback system of Figure 1A and one or more networks;
Figure 2A is a functional block diagram of an example playback device;
Figure 2B is an isometric diagram of an example housing of the playback device of Figure 2A;
Figure 2C is a diagram of another example housing for the playback device of Figure 2A;
Figures 3A-3E are diagrams showing example playback device configurations in accordance with aspects of the disclosure;
Figure 4A is a functional block diagram of an example controller device in accordance with aspects of the disclosure;
Figures 4B and 4C are controller interfaces in accordance with aspects of the disclosure;
Figure 5 is a functional block diagram of certain components of an example network microphone device in accordance with aspects of the disclosure;
Figure 6A is a diagram of an example voice input;
Figure 6B is a graph depicting an example sound specimen in accordance with aspects of the disclosure;
Figure 7 is a functional block diagram of spatial mapping components of a media playback system in accordance with aspects of the disclosure;
Figures 8A-9 illustrate example configurations of spatial mapping components of a media playback system in accordance with aspects of the disclosure;
Figure 10 is a table illustrating an example sequence in generating a spatial map of components of a media playback system in accordance with aspects of the disclosure;
Figures 11 and 12 are schematic plan views of an environment for spatial mapping of components of a media playback system in accordance with aspects of the disclosure; and
Figures 13-17 are flow charts illustrating example methods for spatial mapping of components of a media playback system in accordance with aspects of the disclosure.

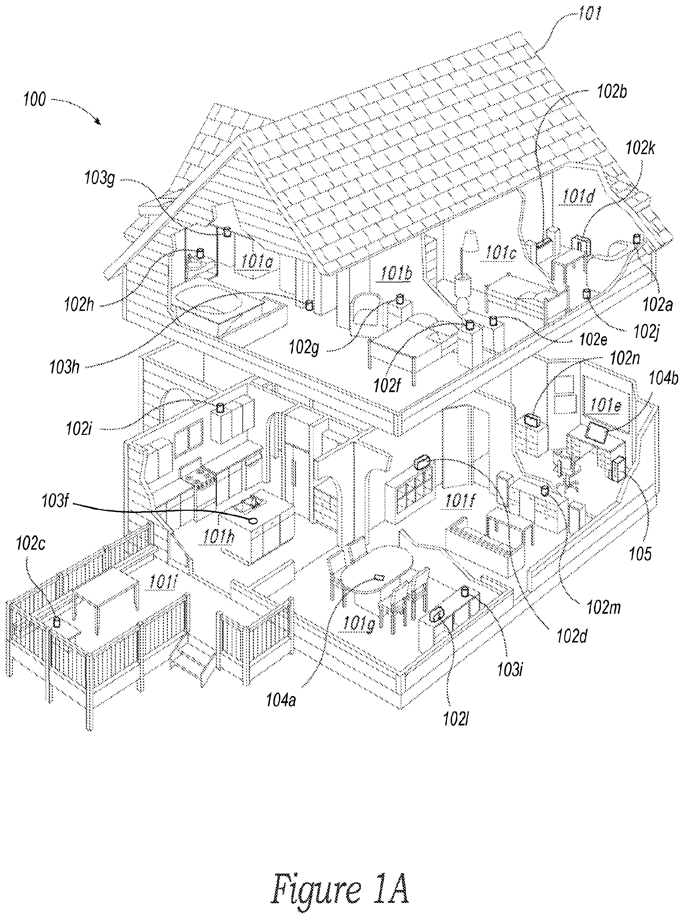

The drawings are for purposes of illustrating example embodiments, but it should be understood that the inventions are not limited to the arrangements and instrumentality shown in the drawings. In the drawings, identical reference numbers identify at least generally similar elements. To facilitate the discussion of any particular element, the most significant digit or digits of any reference number refers to the Figure in which that element is first introduced. For example, element 103a is first introduced and discussed with reference to Figure 1A.

### DETAILED DESCRIPTION

### I. Overview

For media playback systems involving multiple playback devices and/or other components, it can be beneficial to obtain information regarding the spatial orientation and configuration of the various devices within an environment such as a home or business. While some localization information can be obtained via a user input (e.g., a user assigning a room name or location to a particular device), there are limitations to this approach. Moreover, some devices are portable, including portable playback devices (e.g., battery-powered speakers) and portable control devices (e.g., a smartphone or tablet), and as such their location may change dynamically over time.

Aspects of the present technology enable construction of a spatial map representing some or all of the components of a media playback system within an environment. In some examples, such a spatial map can be constructed, maintained, and updated periodically by the system. The spatial map can be distributed among the devices such that each device maintains a local copy of the spatial map. Alternatively, the spatial map can be maintained by less than all of the devices within the environment, with the remaining devices submitting queries for spatial map information or receiving instructions from another device that is based at least in part on spatial map information. In at least some embodiments, the map can be maintained via remote computing devices (e.g., cloud servers) or any other device that is not itself part of the map.

In operation, some or all of the devices within the environment may, in turn, transmit and receive localization signals to and from other devices within the environment. To avoid crosstalk and facilitate efficient communication, an orchestrator device may coordinate among the various devices within the environment and provide instructions according to a determined schedule. In some examples, each device can obtain spatial measurement parameters of one or more other devices within the environment. These spatial measurement parameters (e.g., absolute or relative distances between devices, angular orientation of devices with respect to one another, etc.) can be transmitted to a mapper device, which can then construct a spatial map of the various devices within the environment. Based on the spatial map, one or more device states can be updated, appropriate actions can be taken, or other performance parameters of the media playback system can be modified.

In many situations, it can be beneficial to be able to determine a space state (e.g., a number of individuals in a space, positions of individuals in the space, etc.) of the space between devices of a system. For example, in a home theatre (HT) system, if the positions of individuals in the space can be determined, various audio settings (e.g., balance, fade, volume, etc.) can be adjusted to optimize the sound experience for the individuals. In some aspects of the present technology, spatial map information can be used to determine space states based on measured localization signals between the devices.

As one example, devices determined to be in close proximity to one another can be automatically grouped (or suggested to the user for grouping) for synchronous audio playback. As another example, wireless playback devices can be used in multiple different functions, e.g., as satellite speakers in a HT system, as standalone portable speakers, etc. As a part of a HT system, each speaker may have specific settings and roles within the system (e.g., as a right-channel satellite speaker) which can result in poor performance when the speakers are incorrectly positioned (e.g., when left/right speakers are placed in the opposite positions). In some embodiments, based on localization signals between the devices, the layout (e.g., positions, orientations, etc.) of the devices in the system can be obtained. In response, the system can be modified based on the determined layouts in a variety of ways, including (but not limited to) providing notifications to a user to modify the layout, modifying parameters for devices in the system, etc. In these and various other examples, spatial awareness of the positions of devices within the environment enables improved user experience and device performance.

Although many of the examples described herein refer to MPSs, one skilled in the art will recognize that similar systems and methods can be used in a variety of different systems to locate, predict target devices, and/or train such a predictor, including (but not limited to) security systems, Internet of Things (IoT) systems, etc., without departing from the scope of the present disclosure. Further, the techniques described herein may be advantageously employed for device localization in any of a variety of operating environments including indoor environments, outdoor environments, and mixed indoor-outdoor environments.

While some examples described herein may refer to functions performed by given actors, such as "users" and/or other entities, it should be understood that this description is for purposes of explanation only. The claims should not be interpreted to require action by any such example actor unless explicitly required by the language of the claims themselves.

### II. Example Operating Environment

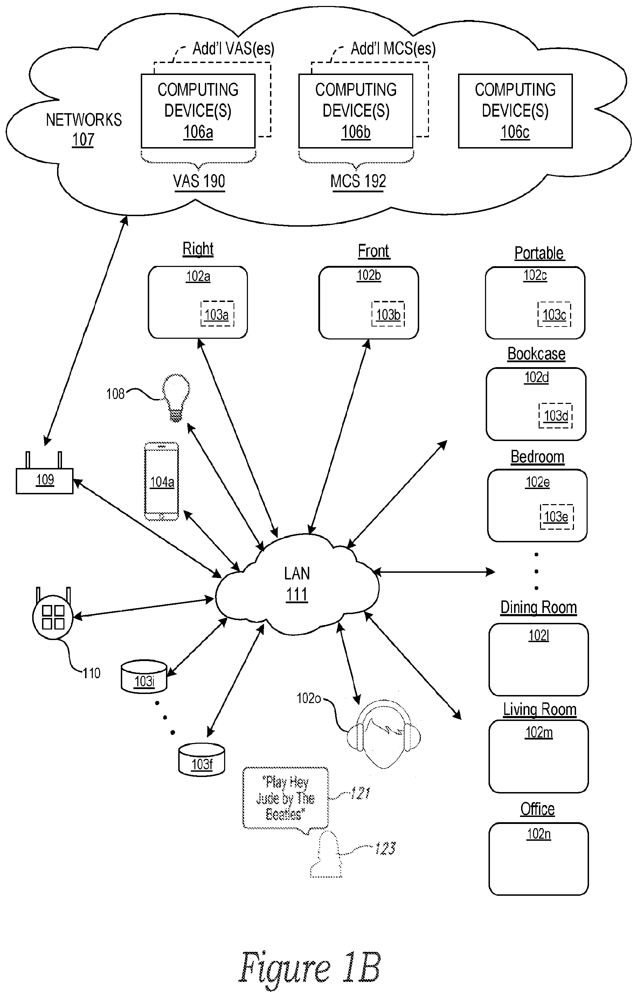

Figures 1A and 1B illustrate an example configuration of a media playback system 100 (or "MPS 100") in which one or more examples disclosed herein may be implemented. Referring first to Figure 1A, the MPS 100 as shown is associated with an example home environment having a plurality of rooms and spaces, which may be collectively referred to as a "home environment," "smart home," or "environment 101." The environment 101 comprises a household having several rooms, spaces, and/or playback zones, including a master bathroom 101a, a master bedroom 101b (referred to herein as "Nick's Room"), a second bedroom 101c, a family room or den 101d, an office 101e, a living room 101f, a dining room 101g, a kitchen 101h, and an outdoor patio 101i. While certain examples and examples are described below in the context of a home environment, the technologies described herein may be implemented in other types of environments. In some examples, for instance, the MPS 100 can be implemented in one or more commercial settings (e.g., a restaurant, mall, airport, hotel, a retail or other store), one or more vehicles (e.g., a sports utility vehicle, bus, car, a ship, a boat, an airplane), multiple environments (e.g., a combination of home and vehicle environments), and/or another suitable environment where multi-zone audio may be desirable.

Within these rooms and spaces, the MPS 100 includes one or more computing devices. Referring to Figures 1A and 1B together, such computing devices can include playback devices 102 (identified individually as playback devices 102a-102o), network microphone devices 103 (identified individually as "NMDs" 103a-102i), and controller devices 104a and 104b (collectively "controller devices 104"). Referring to Figure 1B, the home environment may include additional and/or other computing devices, including local network devices, such as one or more smart illumination devices 108 (Figure 1B), a smart thermostat 110, and a local computing device 105 (Figure 1A). In examples described below, one or more of the various playback devices 102 may be configured as portable playback devices, while others may be configured as stationary playback devices. For example, the headphones 102o (Figure 1B) are a portable playback device, while the playback device 102d on the bookcase may be a stationary device. As another example, the playback device 102c on the Patio may be a battery-powered device, which may allow it to be transported to various areas within the environment 101, and outside of the environment 101, when it is not plugged in to a wall outlet or the like.

With reference still to Figure 1B, the various playback, network microphone, and controller devices 102-104 and/or other network devices of the MPS 100 may be coupled to one another via point-to-point connections and/or over other connections, which may be wired and/or wireless, via a LAN 111 including a network router 109. For example, the playback device 102j in the Den 101d (Figure 1A), which may be designated as the "Left" device, may have a point-to-point connection with the playback device 102a, which is also in the Den 101d and may be designated as the "Right" device. In a related example, the Left playback device 102j may communicate with other network devices, such as the playback device 102b, which may be designated as the "Front" device, via a point-to-point connection and/or other connections via the LAN 111.

As further shown in Figure 1B, the MPS 100 may be coupled to one or more remote computing devices 106 via a wide area network ("WAN") 107. In some examples, each remote computing device 106 may take the form of one or more cloud servers. The remote computing devices 106 may be configured to interact with computing devices in the environment 101 in various ways. For example, the remote computing devices 106 may be configured to facilitate streaming and/or controlling playback of media content, such as audio, in the home environment 101.

In some implementations, the various playback devices, NMDs, and/or controller devices 102-104 may be communicatively coupled to at least one remote computing device associated with a VAS and at least one remote computing device associated with a media content service ("MCS"). For instance, in the illustrated example of Figure 1B, remote computing devices 106a are associated with a VAS 190 and remote computing devices 106b are associated with an MCS 192. Although only a single VAS 190 and a single MCS 192 are shown in the example of Figure 1B for purposes of clarity, the MPS 100 may be coupled to multiple, different VASes and/or MCSes. In some implementations, VASes may be operated by one or more of AMAZON, GOOGLE, APPLE, MICROSOFT, SONOS or other voice assistant providers. In some implementations, MCSes may be operated by one or more of SPOTIFY, PANDORA, AMAZON MUSIC, or other media content services.

As further shown in Figure 1B, the remote computing devices 106 further include remote computing device 106c configured to perform certain operations, such as remotely facilitating media playback functions, managing device and system status information, directing communications between the devices of the MPS 100 and one or multiple VASes and/or MCSes, among other operations. In one example, the remote computing devices 106c provide cloud servers for one or more SONOS Wireless HiFi Systems.

In various implementations, one or more of the playback devices 102 may take the form of or include an on-board (e.g., integrated) network microphone device. For example, the playback devices 102a-e include or are otherwise equipped with corresponding NMDs 103a-e, respectively. A playback device that includes or is equipped with an NMD may be referred to herein interchangeably as a playback device or an NMD unless indicated otherwise in the description. In some cases, one or more of the NMDs 103 may be a stand-alone device. For example, the NMDs 103f and 103g may be stand-alone devices. A stand-alone NMD may omit components and/or functionality that is typically included in a playback device, such as a speaker or related electronics. For instance, in such cases, a stand-alone NMD may not produce audio output or may produce limited audio output (e.g., relatively low-quality audio output).

The various playback and network microphone devices 102 and 103 of the MPS 100 may each be associated with a unique name, which may be assigned to the respective devices by a user, such as during setup of one or more of these devices. For instance, as shown in the illustrated example of Figure 1B, a user may assign the name "Bookcase" to playback device 102d because it is physically situated on a bookcase. Similarly, the NMD 103f may be assigned the named "Island" because it is physically situated on an island countertop in the Kitchen 101h (Figure 1A). Some playback devices may be assigned names according to a zone or room, such as the playback devices 102e, 102l, 102m, and 102n, which are named "Bedroom," "Dining Room," "Living Room," and "Office," respectively. Further, certain playback devices may have functionally descriptive names. For example, the playback devices 102a and 102b are assigned the names "Right" and "Front," respectively, because these two devices are configured to provide specific audio channels during media playback in the zone of the Den 101d (Figure 1A). The playback device 102c in the Patio may be named portable because it is battery-powered and/or readily transportable to different areas of the environment 101. Other naming conventions are possible.

As discussed above, an NMD may detect and process sound from its environment, such as sound that includes background noise mixed with speech spoken by a person in the NMD's vicinity. For example, as sounds are detected by the NMD in the environment, the NMD may process the detected sound to determine if the sound includes speech that contains voice input intended for the NMD and ultimately a particular VAS. For example, the NMD may identify whether speech includes a wake word associated with a particular VAS.

In the illustrated example of Figure 1B, the NMDs 103 are configured to interact with the VAS 190 over a network via the LAN 111 and the router 109. Interactions with the VAS 190 may be initiated, for example, when an NMD identifies in the detected sound a potential wake word. The identification causes a wake-word event, which in turn causes the NMD to begin transmitting detected-sound data to the VAS 190. In some implementations, the various local network devices 102-105 (Figure 1A) and/or remote computing devices 106c of the MPS 100 may exchange various feedback, information, instructions, and/or related data with the remote computing devices associated with the selected VAS. Such exchanges may be related to or independent of transmitted messages containing voice inputs. In some examples, the remote computing device(s) and the media playback system 100 may exchange data via communication paths as described herein and/or using a metadata exchange channel as described in U.S. Application No. 15/438,749 filed February 21, 2017, and titled "Voice Control of a Media Playback System".

Upon receiving the stream of sound data, the VAS 190 determines if there is voice input in the streamed data from the NMD, and if so the VAS 190 will also determine an underlying intent in the voice input. The VAS 190 may next transmit a response back to the MPS 100, which can include transmitting the response directly to the NMD that caused the wake-word event. The response is typically based on the intent that the VAS 190 determined was present in the voice input. As an example, in response to the VAS 190 receiving a voice input with an utterance to "Play Hey Jude by The Beatles," the VAS 190 may determine that the underlying intent of the voice input is to initiate playback and further determine that intent of the voice input is to play the particular song "Hey Jude." After these determinations, the VAS 190 may transmit a command to a particular MCS 192 to retrieve content (i.e., the song "Hey Jude"), and that MCS 192, in turn, provides (e.g., streams) this content directly to the MPS 100 or indirectly via the VAS 190. In some implementations, the VAS 190 may transmit to the MPS 100 a command that causes the MPS 100 itself to retrieve the content from the MCS 192.

In certain implementations, NMDs may facilitate arbitration amongst one another when voice input is identified in speech detected by two or more NMDs located within proximity of one another. For example, the NMD-equipped playback device 102d in the environment 101 (Figure 1A) is in relatively close proximity to the NMD-equipped Living Room playback device 102m, and both devices 102d and 102m may at least sometimes detect the same sound. In such cases, this may require arbitration as to which device is ultimately responsible for providing detected-sound data to the remote VAS. Examples of arbitrating between NMDs may be found, for example, in previously referenced U.S. Application No. 15/438,749.

In certain implementations, an NMD may be assigned to, or otherwise associated with, a designated or default playback device that may not include an NMD. For example, the Island NMD 103f in the Kitchen 101h (Figure 1A) may be assigned to the Dining Room playback device 102l, which is in relatively close proximity to the Island NMD 103f. In practice, an NMD may direct an assigned playback device to play audio in response to a remote VAS receiving a voice input from the NMD to play the audio, which the NMD might have sent to the VAS in response to a user speaking a command to play a certain song, album, playlist, etc. Additional details regarding assigning NMDs and playback devices as designated or default devices may be found, for example, in previously referenced U.S. Patent Application No. 15/438,749.

Further aspects relating to the different components of the example MPS 100 and how the different components may interact to provide a user with a media experience may be found in the following sections. While discussions herein may generally refer to the example MPS 100, technologies described herein are not limited to applications within, among other things, the home environment described above. For instance, the technologies described herein may be useful in other home environment configurations comprising more or fewer of any of the playback, network microphone, and/or controller devices 102-104. For example, the technologies herein may be utilized within an environment having a single playback device 102 and/or a single NMD 103. In some examples of such cases, the LAN 111 (Figure 1B) may be eliminated and the single playback device 102 and/or the single NMD 103 may communicate directly with the remote computing devices 106a-d. In some examples, a telecommunication network (e.g., an LTE network, a 5G network, etc.) may communicate with the various playback, network microphone, and/or controller devices 102-104 independent of a LAN.

### a. Example Playback & Network Microphone Devices

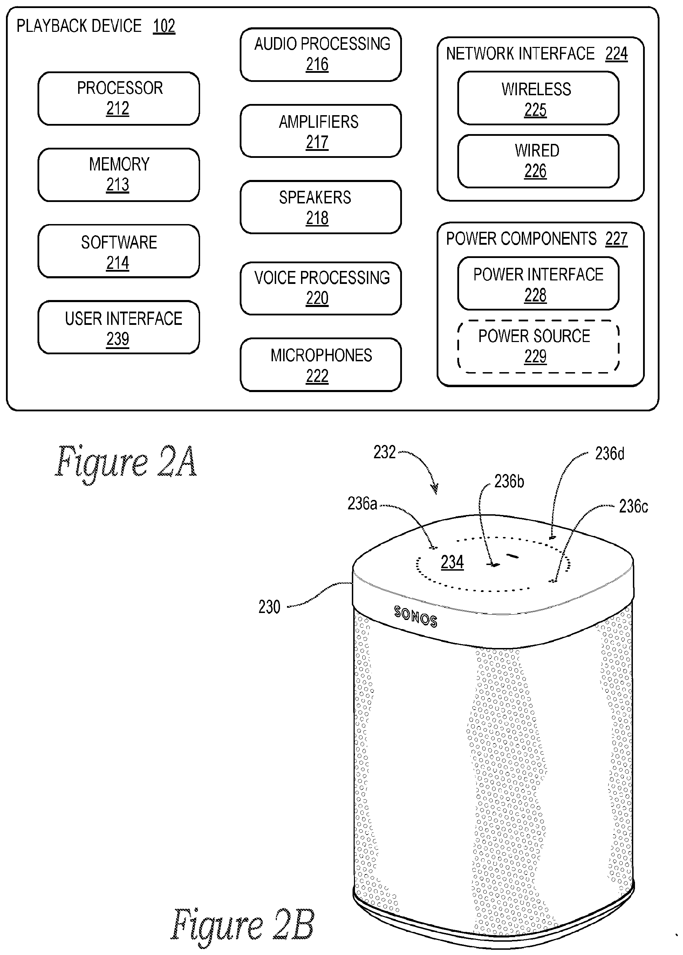

Figure 2A is a functional block diagram illustrating certain aspects of one of the playback devices 102 of the MPS 100 of Figures 1A and 1B. As shown, the playback device 102 includes various components, each of which is discussed in further detail below, and the various components of the playback device 102 may be operably coupled to one another via a system bus, communication network, or some other connection mechanism. In the illustrated example of Figure 2A, the playback device 102 may be referred to as an "NMD-equipped" playback device because it includes components that support the functionality of an NMD, such as one of the NMDs 103 shown in Figure 1A.

As shown, the playback device 102 includes at least one processor 212, which may be a clock-driven computing component configured to process input data according to instructions stored in memory 213. The memory 213 may be a tangible, non-transitory, computer-readable medium configured to store instructions that are executable by the processor 212. For example, the memory 213 may be data storage that can be loaded with software code 214 that is executable by the processor 212 to achieve certain functions.

In one example, these functions may involve the playback device 102 retrieving audio data from an audio source, which may be another playback device. In another example, the functions may involve the playback device 102 sending audio data, detected-sound data (e.g., corresponding to a voice input), and/or other information to another device on a network via at least one network interface 224. In yet another example, the functions may involve the playback device 102 causing one or more other playback devices to synchronously playback audio with the playback device 102. In yet a further example, the functions may involve the playback device 102 facilitating being paired or otherwise bonded with one or more other playback devices to create a multi-channel audio environment. Numerous other example functions are possible, some of which are discussed below.

As just mentioned, certain functions may involve the playback device 102 synchronizing playback of audio content with one or more other playback devices. During synchronous playback, a listener may not perceive time-delay differences between playback of the audio content by the synchronized playback devices. U.S. Patent No. 8,234,395 filed on April 4, 2004, and titled "System and method for synchronizing operations among a plurality of independently clocked digital data processing devices", provides in more detail some examples for audio playback synchronization among playback devices.

To facilitate audio playback, the playback device 102 includes audio processing components 216 that are generally configured to process audio prior to the playback device 102 rendering the audio. In this respect, the audio processing components 216 may include one or more digital-to-analog converters ("DAC"), one or more audio preprocessing components, one or more audio enhancement components, one or more digital signal processors ("DSPs"), and so on. In some implementations, one or more of the audio processing components 216 may be a subcomponent of the processor 212. In operation, the audio processing components 216 receive analog and/or digital audio and process and/or otherwise intentionally alter the audio to produce audio signals for playback.

The produced audio signals may then be provided to one or more audio amplifiers 217 for amplification and playback through one or more speakers 218 operably coupled to the amplifiers 217. The audio amplifiers 217 may include components configured to amplify audio signals to a level for driving one or more of the speakers 218.

Each of the speakers 218 may include an individual transducer (e.g., a "driver") or the speakers 218 may include a complete speaker system involving an enclosure with one or more drivers. A particular driver of a speaker 218 may include, for example, a subwoofer (e.g., for low frequencies), a mid-range driver (e.g., for middle frequencies), and/or a tweeter (e.g., for high frequencies). In some cases, a transducer may be driven by an individual corresponding audio amplifier of the audio amplifiers 217. In some implementations, a playback device may not include the speakers 218, but instead may include a speaker interface for connecting the playback device to external speakers. In certain examples, a playback device may include neither the speakers 218 nor the audio amplifiers 217, but instead may include an audio interface (not shown) for connecting the playback device to an external audio amplifier or audio-visual receiver.

In addition to producing audio signals for playback by the playback device 102, the audio processing components 216 may be configured to process audio to be sent to one or more other playback devices, via the network interface 224, for playback. In example scenarios, audio content to be processed and/or played back by the playback device 102 may be received from an external source, such as via an audio line-in interface (e.g., an auto-detecting 3.5mm audio line-in connection) of the playback device 102 (not shown) or via the network interface 224, as described below.

As shown, the at least one network interface 224, may take the form of one or more wireless interfaces 225 and/or one or more wired interfaces 226. A wireless interface may provide network interface functions for the playback device 102 to wirelessly communicate with other devices (e.g., other playback device(s), NMD(s), and/or controller device(s)) in accordance with a communication protocol (e.g., any wireless standard including IEEE 802.11a, 802.11b, 802.11g, 802.11n, 802.11ac, 802.15, 4G mobile communication standard, and so on). A wired interface may provide network interface functions for the playback device 102 to communicate over a wired connection with other devices in accordance with a communication protocol (e.g., IEEE 802.3). While the network interface 224 shown in Figure 2A include both wired and wireless interfaces, the playback device 102 may in some implementations include only wireless interface(s) or only wired interface(s).

In general, the network interface 224 facilitates data flow between the playback device 102 and one or more other devices on a data network. For instance, the playback device 102 may be configured to receive audio content over the data network from one or more other playback devices, network devices within a LAN, and/or audio content sources over a WAN, such as the Internet. In one example, the audio content and other signals transmitted and received by the playback device 102 may be transmitted in the form of digital packet data comprising an Internet Protocol (IP)-based source address and IP-based destination addresses. In such a case, the network interface 224 may be configured to parse the digital packet data such that the data destined for the playback device 102 is properly received and processed by the playback device 102.

As shown in Figure 2A, the playback device 102 also includes voice processing components 220 that are operably coupled to one or more microphones 222. The microphones 222 are configured to detect sound (i.e., acoustic waves) in the environment of the playback device 102, which is then provided to the voice processing components 220. More specifically, each microphone 222 is configured to detect sound and convert the sound into a digital or analog signal representative of the detected sound, which can then cause the voice processing component 220 to perform various functions based on the detected sound, as described in greater detail below. In one implementation, the microphones 222 are arranged as an array of microphones (e.g., an array of six microphones). In some implementations, the playback device 102 includes more than six microphones (e.g., eight microphones or twelve microphones) or fewer than six microphones (e.g., four microphones, two microphones, or a single microphones).

In operation, the voice-processing components 220 are generally configured to detect and process sound received via the microphones 222, identify potential voice input in the detected sound, and extract detected-sound data to enable a VAS, such as the VAS 190 (Figure 1B), to process voice input identified in the detected-sound data. The voice processing components 220 may include one or more analog-to-digital converters, an acoustic echo canceller ("AEC"), a spatial processor (e.g., one or more multi-channel Wiener filters, one or more other filters, and/or one or more beam former components), one or more buffers (e.g., one or more circular buffers), one or more wake-word engines, one or more voice extractors, and/or one or more speech processing components (e.g., components configured to recognize a voice of a particular user or a particular set of users associated with a household), among other example voice processing components. In example implementations, the voice processing components 220 may include or otherwise take the form of one or more DSPs or one or more modules of a DSP. In this respect, certain voice processing components 220 may be configured with particular parameters (e.g., gain and/or spectral parameters) that may be modified or otherwise tuned to achieve particular functions. In some implementations, one or more of the voice processing components 220 may be a subcomponent of the processor 212.

In some implementations, the voice-processing components 220 may detect and store a user's voice profile, which may be associated with a user account of the MPS 100. For example, voice profiles may be stored as and/or compared to variables stored in a set of command information or data table. The voice profile may include aspects of the tone or frequency of a user's voice and/or other unique aspects of the user's voice, such as those described in previously referenced U.S. Patent Application No. 15/438,749.

As further shown in Figure 2A, the playback device 102 also includes power components 227. The power components 227 include at least an external power source interface 228, which may be coupled to a power source (not shown) via a power cable or the like that physically connects the playback device 102 to an electrical outlet or some other external power source. Other power components may include, for example, transformers, converters, and like components configured to format electrical power.

In some implementations, the power components 227 of the playback device 102 may additionally include an internal power source 229 (e.g., one or more batteries) configured to power the playback device 102 without a physical connection to an external power source. When equipped with the internal power source 229, the playback device 102 may operate independent of an external power source. In some such implementations, the external power source interface 228 may be configured to facilitate charging the internal power source 229. As discussed before, a playback device comprising an internal power source may be referred to herein as a "portable playback device." On the other hand, a playback device that operates using an external power source may be referred to herein as a "stationary playback device," although such a device may in fact be moved around a home or other environment.

The playback device 102 further includes a user interface 239 that may facilitate user interactions independent of or in conjunction with user interactions facilitated by one or more of the controller devices 104. In various examples, the user interface 239 includes one or more physical buttons and/or supports graphical interfaces provided on touch sensitive screen(s) and/or surface(s), among other possibilities, for a user to directly provide input. The user interface 239 may further include one or more of lights (e.g., LEDs) and the speakers to provide visual and/or audio feedback to a user.

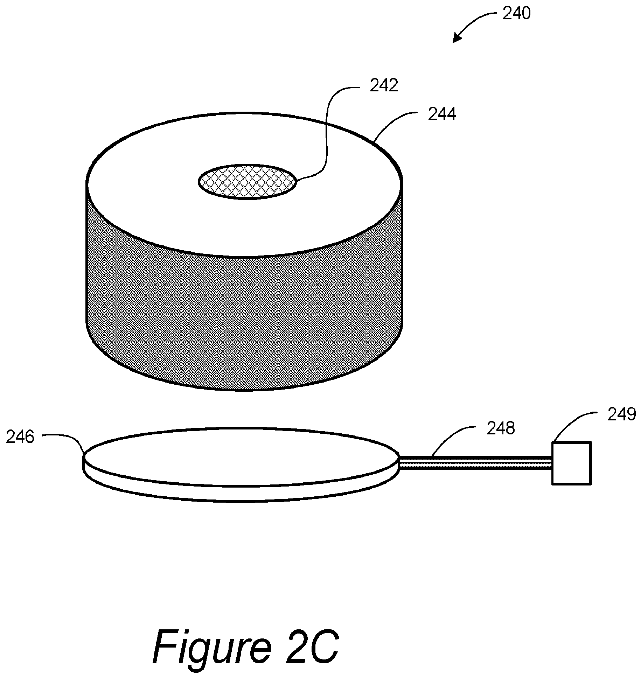

As an illustrative example, Figure 2Bshows an example housing 230 of the playback device 102 that includes a user interface in the form of a control area 232 at a top portion 234 of the housing 230. The control area 232 includes buttons 236a-c for controlling audio playback, volume level, and other functions. The control area 232 also includes a button 236d for toggling the microphones 222 to either an on state or an off state.

As further shown in Figure 2B, the control area 232 is at least partially surrounded by apertures formed in the top portion 234 of the housing 230 through which the microphones 222 (not visible in Figure 2B) receive the sound in the environment of the playback device 102. The microphones 222 may be arranged in various positions along and/or within the top portion 234 or other areas of the housing 230 so as to detect sound from one or more directions relative to the playback device 102.

As mentioned above, the playback device 102 may be constructed as a portable playback device, such as an ultra-portable playback device, that comprises an internal power source. Figure 2C shows an example housing 240 for such a portable playback device. As shown, the housing 240 of the portable playback device includes a user interface in the form of a control area 242 at a top portion 244 of the housing 240. The control area 242 may include a capacitive touch sensor for controlling audio playback, volume level, and other functions. The housing 240 of the portable playback device may be configured to engage with a dock 246 that is connected to an external power source via cable 248 (e.g., a USB cable) coupled to a power adapter 249 (e.g., a power adapter that converts power from a wall outlet to a USB port). The dock 246 may be configured to provide power to the portable playback device to recharge an internal battery. In some embodiments, the dock 246 may comprise a set of one or more conductive contacts (not shown) positioned on the top of the dock 246 that engage with conductive contacts on the bottom of the housing 240 (not shown). In other embodiments, the dock 246 may provide power from the cable 248 to the portable playback device without the use of conductive contacts. For example, the dock 246 may wirelessly charge the portable playback device via one or more inductive coils (e.g., consistent with the QI wireless charging standard) integrated into each of the dock 246 and the portable playback device. Additionally, the dock 246 may comprise one or more mechanisms for communicating with the playback device using, for example, Near Field Communication (NFC) and/or BLUETOOTH communication.

By way of illustration, SONOS, Inc. presently offers (or has offered) for sale certain playback devices that may implement certain of the examples disclosed herein, including a "PLAY:1," "PLAY:3," "PLAY:5," "PLAYBAR," "MOVE," "ROAM," "CONNECT:AMP," "PLAYBASE," "BEAM," "ARC," "CONNECT," and "SUB." Any other past, present, and/or future playback devices may additionally or alternatively be used to implement the playback devices of example examples disclosed herein. Additionally, it should be understood that a playback device is not limited to the examples illustrated in Figures 2A or 2B or to the SONOS product offerings. For example, a playback device may include, or otherwise take the form of, a wired or wireless headphone set, which may operate as a part of the media playback system 100 via a network interface or the like. In another example, a playback device may include or interact with a docking station for personal mobile media playback devices. In yet another example, a playback device may be integral to another device or component such as a television, a lighting fixture, or some other device for indoor or outdoor use.

### b. Example Playback Device Configurations

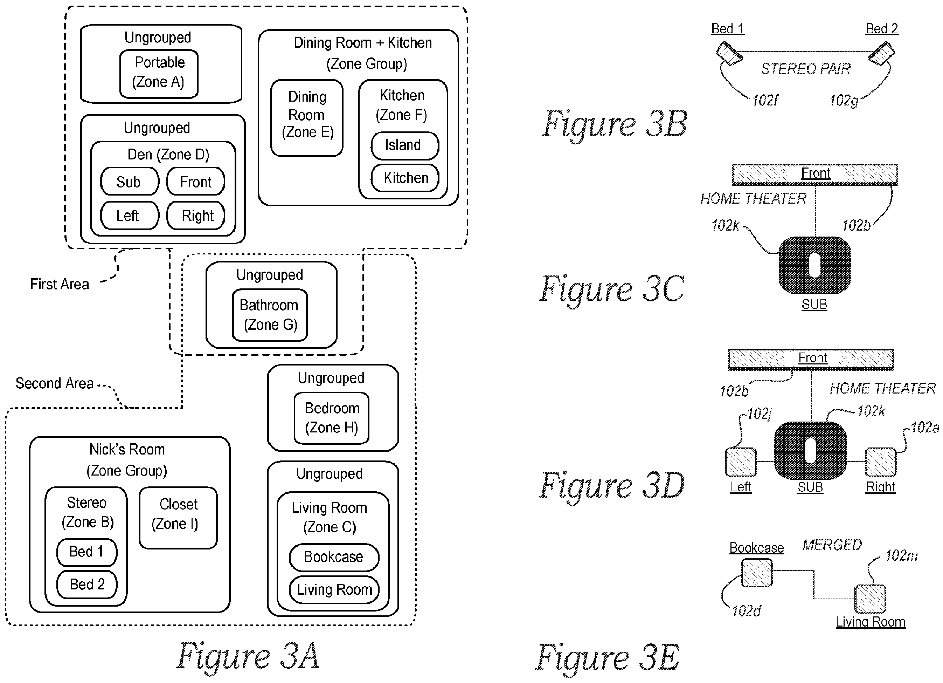

Figures 3A-3E show example configurations of playback devices. Referring first to Figure 3A, in some example instances, a single playback device may belong to a zone. For example, the playback device 102c (Figure 1A) on the Patio may belong to Zone A. In some implementations described below, multiple playback devices may be "bonded" to form a "bonded pair," which together form a single zone. For example, the playback device 102f (Figure 1A) named "Bed 1" in Figure 3A may be bonded to the playback device 102g (Figure 1A) named "Bed 2" in Figure 3A to form Zone B. Bonded playback devices may have different playback responsibilities (e.g., channel responsibilities). In another implementation described below, multiple playback devices may be merged to form a single zone. For example, the playback device 102d named "Bookcase" may be merged with the playback device 102m named "Living Room" to form a single Zone C. The merged playback devices 102d and 102m may not be specifically assigned different playback responsibilities. That is, the merged playback devices 102d and 102m may, aside from playing audio content in synchrony, each play audio content as they would if they were not merged.

For purposes of control, each zone in the MPS 100 may be represented as a single user interface ("UI") entity. For example, as displayed by the controller devices 104, Zone A may be provided as a single entity named "Portable," Zone B may be provided as a single entity named "Stereo," and Zone C may be provided as a single entity named "Living Room."

In various examples, a zone may take on the name of one of the playback devices belonging to the zone. For example, Zone C may take on the name of the Living Room device 102m (as shown). In another example, Zone C may instead take on the name of the Bookcase device 102d. In a further example, Zone C may take on a name that is some combination of the Bookcase device 102d and Living Room device 102m. The name that is chosen may be selected by a user via inputs at a controller device 104. In some examples, a zone may be given a name that is different than the device(s) belonging to the zone. For example, Zone B in Figure 3A is named "Stereo" but none of the devices in Zone B have this name. In one aspect, Zone B is a single UI entity representing a single device named "Stereo," composed of constituent devices "Bed 1" and "Bed 2." In one implementation, the Bed 1 device may be playback device 102f in the master bedroom 101h (Figure 1A) and the Bed 2 device may be the playback device 102g also in the master bedroom 101h (Figure 1A).

As noted above, playback devices that are bonded may have different playback responsibilities, such as playback responsibilities for certain audio channels. For example, as shown in Figure 3B, the Bed 1 and Bed 2 devices 102f and 102g may be bonded so as to produce or enhance a stereo effect of audio content. In this example, the Bed 1 playback device 102f may be configured to play a left channel audio component, while the Bed 2 playback device 102g may be configured to play a right channel audio component. In some implementations, such stereo bonding may be referred to as "pairing."

Additionally, playback devices that are configured to be bonded may have additional and/or different respective speaker drivers. As shown in Figure 3C, the playback device 102b named "Front" may be bonded with the playback device 102k named "SUB." The Front device 102b may render a range of mid to high frequencies, and the SUB device 102k may render low frequencies as, for example, a subwoofer. When unbonded, the Front device 102b may be configured to render a full range of frequencies. As another example, Figure 3D shows the Front and SUB devices 102b and 102k further bonded with Right and Left playback devices 102a and 102j, respectively. In some implementations, the Right and Left devices 102a and 102j may form surround or "satellite" channels of a home theater system. The bonded playback devices 102a, 102b, 102j, and 102k may form a single Zone D (Figure 3A).

In some implementations, playback devices may also be "merged." In contrast to certain bonded playback devices, playback devices that are merged may not have assigned playback responsibilities but may each render the full range of audio content that each respective playback device is capable of. Nevertheless, merged devices may be represented as a single UI entity (i.e., a zone, as discussed above). For instance, Figure 3E shows the playback devices 102d and 102m in the Living Room merged, which would result in these devices being represented by the single UI entity of Zone C. In one example, the playback devices 102d and 102m may playback audio in synchrony, during which each outputs the full range of audio content that each respective playback device 102d and 102m is capable of rendering.

In some examples, a stand-alone NMD may be in a zone by itself. For example, the NMD 103h from Figure 1A is named "Closet" and forms Zone I in Figure 3A. An NMD may also be bonded or merged with another device so as to form a zone. For example, the NMD device 103f named "Island" may be bonded with the playback device 102i Kitchen, which together form Zone F, which is also named "Kitchen." Additional details regarding assigning NMDs and playback devices as designated or default devices may be found, for example, in previously referenced U.S. Patent Application No. 15/438,749. In some examples, a stand-alone NMD may not be assigned to a zone.

Zones of individual, bonded, and/or merged devices may be arranged to form a set of playback devices that playback audio in synchrony. Such a set of playback devices may be referred to as a "group," "zone group," "synchrony group," or "playback group." In response to inputs provided via a controller device 104, playback devices may be dynamically grouped and ungrouped to form new or different groups that synchronously play back audio content. For example, referring to Figure 3A, Zone A may be grouped with Zone B to form a zone group that includes the playback devices of the two zones. As another example, Zone A may be grouped with one or more other Zones C-I. The Zones A-I may be grouped and ungrouped in numerous ways. For example, three, four, five, or more (e.g., all) of the Zones A-I may be grouped. When grouped, the zones of individual and/or bonded playback devices may play back audio in synchrony with one another, as described in previously referenced U.S. Patent No. 8,234,395. Grouped and bonded devices are example types of associations between portable and stationary playback devices that may be caused in response to a trigger event, as discussed above and described in greater detail below.

In various implementations, the zones in an environment may be assigned a particular name, which may be the default name of a zone within a zone group or a combination of the names of the zones within a zone group, such as "Dining Room + Kitchen," as shown in Figure 3A. In some examples, a zone group may be given a unique name selected by a user, such as "Nick's Room," as also shown in Figure 3A. The name "Nick's Room" may be a name chosen by a user over a prior name for the zone group, such as the room name "Master Bedroom."

Referring back to Figure 2A, certain data may be stored in the memory 213 as one or more state variables that are periodically updated and used to describe the state of a playback zone, the playback device(s), and/or a zone group associated therewith. The memory 213 may also include the data associated with the state of the other devices of the media playback system 100, which may be shared from time to time among the devices so that one or more of the devices have the most recent data associated with the system.

In some examples, the memory 213 of the playback device 102 may store instances of various variable types associated with the states. Variables instances may be stored with identifiers (e.g., tags) corresponding to type. For example, certain identifiers may be a first type "a1" to identify playback device(s) of a zone, a second type "b1" to identify playback device(s) that may be bonded in the zone, and a third type "c1" to identify a zone group to which the zone may belong. As a related example, in Figure 1A, identifiers associated with the Patio may indicate that the Patio is the only playback device of a particular zone and not in a zone group. Identifiers associated with the Living Room may indicate that the Living Room is not grouped with other zones but includes bonded playback devices 102a, 102b, 102j, and 102k. Identifiers associated with the Dining Room may indicate that the Dining Room is part of Dining Room + Kitchen group and that devices 103f and 102i are bonded. Identifiers associated with the Kitchen may indicate the same or similar information by virtue of the Kitchen being part of the Dining Room + Kitchen zone group. Other example zone variables and identifiers are described below.

In yet another example, the MPS 100 may include variables or identifiers representing other associations of zones and zone groups, such as identifiers associated with Areas, as shown in Figure 3A. An Area may involve a cluster of zone groups and/or zones not within a zone group. For instance, Figure 3A shows a first area named "First Area" and a second area named "Second Area." The First Area includes zones and zone groups of the Patio, Den, Dining Room, Kitchen, and Bathroom. The Second Area includes zones and zone groups of the Bathroom, Nick's Room, Bedroom, and Living Room. In one aspect, an Area may be used to invoke a cluster of zone groups and/or zones that share one or more zones and/or zone groups of another cluster. In this respect, such an Area differs from a zone group, which does not share a zone with another zone group. Further examples of techniques for implementing Areas may be found, for example, in U.S. Application No. 15/682,506 filed August 21, 2017 and titled "Room Association Based on Name," and U.S. Patent No. 8,483,853 filed September 11, 2007, and titled "Controlling and manipulating groupings in a multi-zone media system". In some examples, the MPS 100 may not implement Areas, in which case the system may not store variables associated with Areas.

The memory 213 may be further configured to store other data. Such data may pertain to audio sources accessible by the playback device 102 or a playback queue that the playback device (or some other playback device(s)) may be associated with. In examples described below, the memory 213 is configured to store a set of command data for selecting a particular VAS when processing voice inputs.

During operation, one or more playback zones in the environment of Figure 1A may each be playing different audio content. For instance, the user may be grilling in the Patio zone and listening to hip hop music being played by the playback device 102c, while another user may be preparing food in the Kitchen zone and listening to classical music being played by the playback device 102i. In another example, a playback zone may play the same audio content in synchrony with another playback zone. For instance, the user may be in the Office zone where the playback device 102n is playing the same hip-hop music that is being playing by playback device 102c in the Patio zone. In such a case, playback devices 102c and 102n may be playing the hip-hop in synchrony such that the user may seamlessly (or at least substantially seamlessly) enjoy the audio content that is being played out-loud while moving between different playback zones. Synchronization among playback zones may be achieved in a manner similar to that of synchronization among playback devices, as described in previously referenced U.S. Patent No. 8,234,395.

As suggested above, the zone configurations of the MPS 100 may be dynamically modified. As such, the MPS 100 may support numerous configurations. For example, if a user physically moves one or more playback devices to or from a zone, the MPS 100 may be reconfigured to accommodate the change(s). For instance, if the user physically moves the playback device 102c from the Patio zone to the Office zone, the Office zone may now include both the playback devices 102c and 102n. In some cases, the user may pair or group the moved playback device 102c with the Office zone and/or rename the players in the Office zone using, for example, one of the controller devices 104 and/or voice input. As another example, if one or more playback devices 102 are moved to a particular space in the home environment that is not already a playback zone, the moved playback device(s) may be renamed or associated with a playback zone for the particular space.

Further, different playback zones of the MPS 100 may be dynamically combined into zone groups or split up into individual playback zones. For example, the Dining Room zone and the Kitchen zone may be combined into a zone group for a dinner party such that playback devices 102i and 102l may render audio content in synchrony. As another example, bonded playback devices in the Den zone may be split into (i) a television zone and (ii) a separate listening zone. The television zone may include the Front playback device 102b. The listening zone may include the Right, Left, and SUB playback devices 102a, 102j, and 102k, which may be grouped, paired, or merged, as described above. Splitting the Den zone in such a manner may allow one user to listen to music in the listening zone in one area of the living room space, and another user to watch the television in another area of the living room space. In a related example, a user may utilize either of the NMD 103a or 103b (Figure 1B) to control the Den zone before it is separated into the television zone and the listening zone. Once separated, the listening zone may be controlled, for example, by a user in the vicinity of the NMD 103a, and the television zone may be controlled, for example, by a user in the vicinity of the NMD 103b. As described above, however, any of the NMDs 103 may be configured to control the various playback and other devices of the MPS 100.

### c. Example Controller Devices

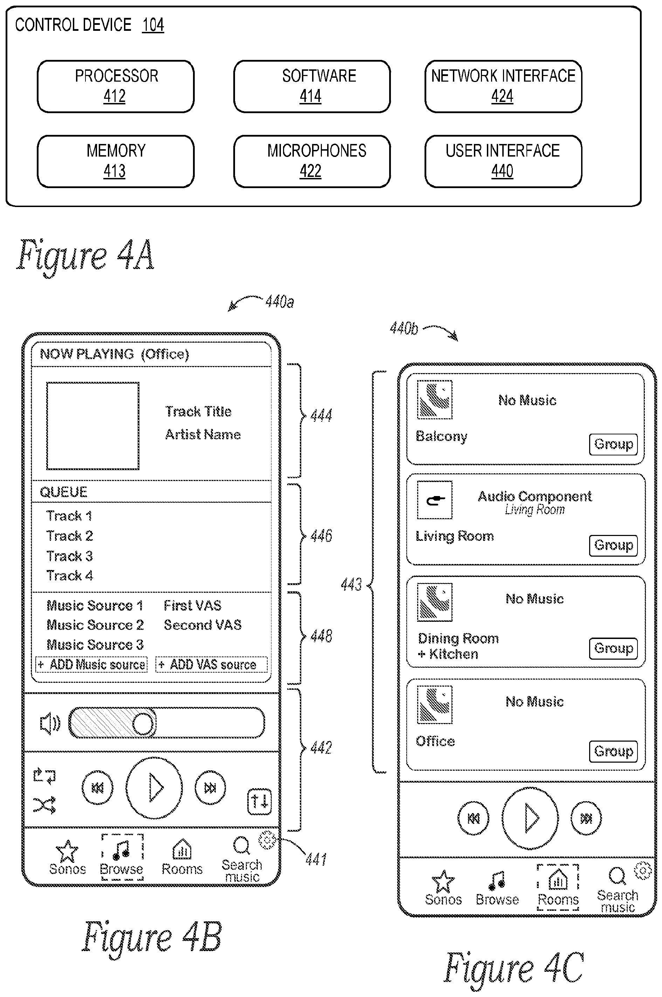

Figure 4A is a functional block diagram illustrating certain aspects of a selected one of the controller devices 104 of the MPS 100 of Figure 1A. Such controller devices may also be referred to herein as a "control device" or "controller." The controller device shown in Figure 4A may include components that are generally similar to certain components of the network devices described above, such as a processor 412, memory 413 storing program software 414, at least one network interface 424, and one or more microphones 422. In one example, a controller device may be a dedicated controller for the MPS 100. In another example, a controller device may be a network device on which media playback system controller application software may be installed, such as for example, an iPhone^{™}, iPad^{™} or any other smart phone, tablet, or network device (e.g., a networked computer such as a PC or Mac^{™}).

The memory 413 of the controller device 104 may be configured to store controller application software and other data associated with the MPS 100 and/or a user of the system 100. The memory 413 may be loaded with instructions in software 414 that are executable by the processor 412 to achieve certain functions, such as facilitating user access, control, and/or configuration of the MPS 100. The controller device 104 is configured to communicate with other network devices via the network interface 424, which may take the form of a wireless interface, as described above.

In one example, system information (e.g., such as a state variable) may be communicated between the controller device 104 and other devices via the network interface 424. For instance, the controller device 104 may receive playback zone and zone group configurations in the MPS 100 from a playback device, an NMD, or another network device. Likewise, the controller device 104 may transmit such system information to a playback device or another network device via the network interface 424. In some cases, the other network device may be another controller device.

The controller device 104 may also communicate playback device control commands, such as volume control and audio playback control, to a playback device via the network interface 424. As suggested above, changes to configurations of the MPS 100 may also be performed by a user using the controller device 104. The configuration changes may include adding/removing one or more playback devices to/from a zone, adding/removing one or more zones to/from a zone group, forming a bonded or merged player, separating one or more playback devices from a bonded or merged player, among others.

As shown in Figure 4A, the controller device 104 also includes a user interface 440 that is generally configured to facilitate user access and control of the MPS 100. The user interface 440 may include a touch-screen display or other physical interface configured to provide various graphical controller interfaces, such as the controller interfaces 440a and 440b shown in Figures 4B and 4C. Referring to Figures 4B and 4C together, the controller interfaces 440a and 440b includes a playback control region 442, a playback zone region 443, a playback status region 444, a playback queue region 446, and a sources region 448. The user interface as shown is just one example of an interface that may be provided on a network device, such as the controller device shown in Figure 4A, and accessed by users to control a media playback system, such as the MPS 100. Other user interfaces of varying formats, styles, and interactive sequences may alternatively be implemented on one or more network devices to provide comparable control access to a media playback system.

The playback control region 442 (Figure 4B) may include selectable icons (e.g., by way of touch or by using a cursor) that, when selected, cause playback devices in a selected playback zone or zone group to play or pause, fast forward, rewind, skip to next, skip to previous, enter/exit shuffle mode, enter/exit repeat mode, enter/exit cross fade mode, etc. The playback control region 442 may also include selectable icons that, when selected, modify equalization settings and/or playback volume, among other possibilities.

The playback zone region 443 (Figure 4C) may include representations of playback zones within the MPS 100. The playback zones regions 443 may also include a representation of zone groups, such as the Dining Room + Kitchen zone group, as shown. In some examples, the graphical representations of playback zones may be selectable to bring up additional selectable icons to manage or configure the playback zones in the MPS 100, such as a creation of bonded zones, creation of zone groups, separation of zone groups, and renaming of zone groups, among other possibilities.

For example, as shown, a "group" icon may be provided within each of the graphical representations of playback zones. The "group" icon provided within a graphical representation of a particular zone may be selectable to bring up options to select one or more other zones in the MPS 100 to be grouped with the particular zone. Once grouped, playback devices in the zones that have been grouped with the particular zone will be configured to play audio content in synchrony with the playback device(s) in the particular zone. Analogously, a "group" icon may be provided within a graphical representation of a zone group. In this case, the "group" icon may be selectable to bring up options to deselect one or more zones in the zone group to be removed from the zone group. Other interactions and implementations for grouping and ungrouping zones via a user interface are also possible. The representations of playback zones in the playback zone region 443 (Figure 4C) may be dynamically updated as playback zone or zone group configurations are modified.

The playback status region 444 (Figure 4B) may include graphical representations of audio content that is presently being played, previously played, or scheduled to play next in the selected playback zone or zone group. The selected playback zone or zone group may be visually distinguished on a controller interface, such as within the playback zone region 443 and/or the playback status region 444. The graphical representations may include track title, artist name, album name, album year, track length, and/or other relevant information that may be useful for the user to know when controlling the MPS 100 via a controller interface.

The playback queue region 446 may include graphical representations of audio content in a playback queue associated with the selected playback zone or zone group. In some examples, each playback zone or zone group may be associated with a playback queue comprising information corresponding to zero or more audio items for playback by the playback zone or zone group. For instance, each audio item in the playback queue may comprise a uniform resource identifier (URI), a uniform resource locator (URL), or some other identifier that may be used by a playback device in the playback zone or zone group to find and/or retrieve the audio item from a local audio content source or a networked audio content source, which may then be played back by the playback device.

In one example, a playlist may be added to a playback queue, in which case information corresponding to each audio item in the playlist may be added to the playback queue. In another example, audio items in a playback queue may be saved as a playlist. In a further example, a playback queue may be empty, or populated but "not in use" when the playback zone or zone group is playing continuously streamed audio content, such as Internet radio that may continue to play until otherwise stopped, rather than discrete audio items that have playback durations. In an alternative example, a playback queue can include Internet radio and/or other streaming audio content items and be "in use" when the playback zone or zone group is playing those items. Other examples are also possible.

When playback zones or zone groups are "grouped" or "ungrouped," playback queues associated with the affected playback zones or zone groups may be cleared or re-associated. For example, if a first playback zone including a first playback queue is grouped with a second playback zone including a second playback queue, the established zone group may have an associated playback queue that is initially empty, that contains audio items from the first playback queue (such as if the second playback zone was added to the first playback zone), that contains audio items from the second playback queue (such as if the first playback zone was added to the second playback zone), or a combination of audio items from both the first and second playback queues. Subsequently, if the established zone group is ungrouped, the resulting first playback zone may be re-associated with the previous first playback queue or may be associated with a new playback queue that is empty or contains audio items from the playback queue associated with the established zone group before the established zone group was ungrouped. Similarly, the resulting second playback zone may be re-associated with the previous second playback queue or may be associated with a new playback queue that is empty or contains audio items from the playback queue associated with the established zone group before the established zone group was ungrouped. Other examples are also possible.

With reference still to Figures 4B and 4C, the graphical representations of audio content in the playback queue region 446 (Figure 4B) may include track titles, artist names, track lengths, and/or other relevant information associated with the audio content in the playback queue. In one example, graphical representations of audio content may be selectable to bring up additional selectable icons to manage and/or manipulate the playback queue and/or audio content represented in the playback queue. For instance, a represented audio content may be removed from the playback queue, moved to a different position within the playback queue, or selected to be played immediately, or after any currently playing audio content, among other possibilities. A playback queue associated with a playback zone or zone group may be stored in a memory on one or more playback devices in the playback zone or zone group, on a playback device that is not in the playback zone or zone group, and/or some other designated device. Playback of such a playback queue may involve one or more playback devices playing back media items of the queue, perhaps in sequential or random order.

The sources region 448 may include graphical representations of selectable audio content sources and/or selectable voice assistants associated with a corresponding VAS. The VASes may be selectively assigned. In some examples, multiple VASes, such as AMAZON's Alexa, MICROSOFT's Cortana, etc., may be invokable by the same NMD. In some examples, a user may assign a VAS exclusively to one or more NMDs. For example, a user may assign a first VAS to one or both of the NMDs 102a and 102b in the Living Room shown in Figure 1A, and a second VAS to the NMD 103f in the Kitchen. Other examples are possible.

### d. Example Audio Content Sources

The audio sources in the sources region 448 may be audio content sources from which audio content may be retrieved and played by the selected playback zone or zone group. One or more playback devices in a zone or zone group may be configured to retrieve for playback audio content (e.g., according to a corresponding URI or URL for the audio content) from a variety of available audio content sources. In one example, audio content may be retrieved by a playback device directly from a corresponding audio content source (e.g., via a line-in connection). In another example, audio content may be provided to a playback device over a network via one or more other playback devices or network devices. As described in greater detail below, in some examples, audio content may be provided by one or more media content services.

Example audio content sources may include a memory of one or more playback devices in a media playback system such as the MPS 100 of Figure 1, local music libraries on one or more network devices (e.g., a controller device, a network-enabled personal computer, or a networked-attached storage ("NAS")), streaming audio services providing audio content via the Internet (e.g., cloud-based music services), or audio sources connected to the media playback system via a line-in input connection on a playback device or network device, among other possibilities.

**In** some examples, audio content sources may be added or removed from a media playback system such as the MPS 100 of Figure 1A. In one example, an indexing of audio items may be performed whenever one or more audio content sources are added, removed, or updated. Indexing of audio items may involve scanning for identifiable audio items in all folders/directories shared over a network accessible by playback devices in the media playback system and generating or updating an audio content database comprising metadata (e.g., title, artist, album, track length, among others) and other associated information, such as a URI or URL for each identifiable audio item found. Other examples for managing and maintaining audio content sources may also be possible.

### e. Example Network Microphone Devices

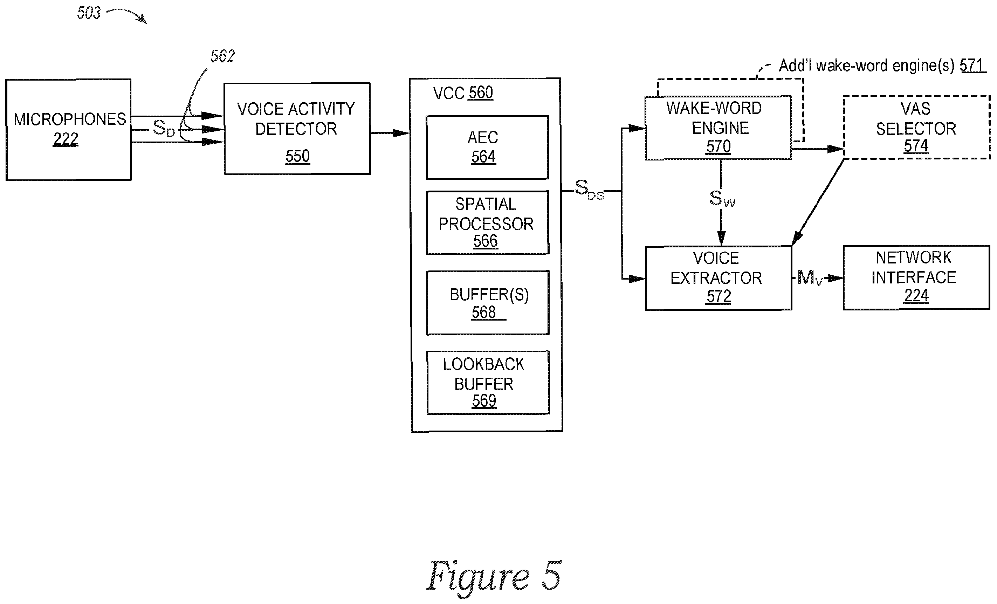

Figure 5 is a functional block diagram showing an NMD 503 configured in accordance with examples of the disclosure. The NMD 503 includes a voice activity detector 550, voice capture components ("VCC", or collectively "voice processor 560"), a wake-word engine 570, and at least one voice extractor 572, each of which is operably coupled to the voice processor 560. The NMD 503 further includes the microphones 222 and the at least one network interface 224 described above and may also include other components, such as audio amplifiers, interface, etc., which are not shown in Figure 5 for purposes of clarity.

The microphones 222 of the NMD 503 are configured to provide detected sound, *S_{D},* from the environment of the NMD 503 to the voice activity detector 550. The detected sound *S_{D}* may take the form of one or more analog or digital signals. In example implementations, the detected sound *S_{D}* may be composed of a plurality signals associated with respective channels 562 that are fed to the voice processor 560.

Each channel 562 may correspond to a particular microphone 222. For example, an NMD having six microphones may have six corresponding channels. Each channel of the detected sound *S_{D}* may bear certain similarities to the other channels but may differ in certain regards, which may be due to the position of the given channel's corresponding microphone relative to the microphones of other channels. For example, one or more of the channels of the detected sound *S_{D}* may have a greater signal to noise ratio ("SNR") of speech to background noise than other channels.

In operation, the voice activity detector 550 can process the detected sound *S_{D}* to determine whether speech is present. If voice activity is detected, the detected sound *S_{D}* can be passed to the VCC 560 for additional downstream processing. While in some examples the detected sound *S_{D}* is passed to the VCC 560 without any processing via the voice activity detector 550, in various examples the voice activity detector 550 may perform certain processing functions such that the input to the voice activity detector 550 is not identical to the output *S_{D}* provided to the VCC 560. For example, the voice activity detector 550 may buffer and/or time-delay the signal, may perform channel selection, or any other suitable pre-processing steps.

If, voice activity is not identified in the detected sound *S_{D}* via the voice activity detector 550, then the further processing steps may be forgone. For example, the sound data may not be passed to the VCC 560 and downstream components. Additionally or alternatively, the downstream components can be configured to forgo processing the incoming sound data *S_{D},* such as by the use of bypass tags or other techniques. In some examples, the downstream components (e.g., VCC 560, wake-word engine 570, voice extractor 572, network interface 224) can remain in a standby, disabled, or low-power state until voice activity is detected via the voice activity detector 550, at which point some or all of these downstream components can transition to a higher-power or fully operational state. When transitioning from the low-power, standby, or disabled stage to a fully operational stage, any number of components may be turned on, supplied power or additional power, taken out of standby or sleep stage, or otherwise activated in such a way that the enabled component(s) are allowed to draw more power than they could when disabled. With this arrangement, the NMD 503 can assume a relatively low-power stage while monitoring for speech activity via the voice activity detector 550. Unless and until the voice activity detector 550 identifies voice activity, the NMD 503 may remain in the low-power stage. In some examples, after transitioning to the higher-power or fully operational stage, the NMD 503 may revert to the low-power or standby stage once voice input is no longer detected via the voice activity detector 550, after a VAS interaction is determined to be concluded, and/or once a given period of time has elapsed.

In various examples, the voice activity detector 550 can perform a first algorithm for identifying speech in the sound data *S_{D}* detected via the microphone(s) 222. The algorithm can include any suitable algorithm for discriminating between speech and non-speech sound data. In some examples, the algorithm can include extracting certain acoustic features from the sound data, such as energy-based features (e.g., signal-to-noise ratio), periodicity (e.g., speech signals tend to be more periodic than background noises), speech signal dynamics (e.g., analyzing the variance of power envelopes), or others. One or more such acoustic features can then be analyzed using statistical models or other discriminators to detect voice activity in the sound data. Example classifiers include Gaussian mixture models, Laplacian models, or other classifiers that discriminate between speech and non-speech sound data. Additional examples include using neural network-based approaches. As well as energy, other features including entropy, pitch, or zero-crossing rate can be used as input to the classifier. Many approaches can be implemented directly in the time-domain or alternatively in the frequency-domain by applying a filter bank to the microphone input signals. For example, a short-time Fourier transform (STFT) enables *S_{D}* and the associated features to be efficiently split into multiple frequency bands each of which can be processed independently. In some examples, detecting speech in the sound data via the voice activity detector 550 consumes less power and/or computational resources (e.g., as measured by average CPU clock rate or millions of instructions per second (MIPS) values) than one or more of the downstream processes such as spatial processing, acoustic echo cancellation, wake-word detection, or any other downstream signal processing steps. For example, the amount of energy required to power a processing unit is directly related to the clock rate or MIPS, thus by reducing the average MIPS it is possible to also reduce average power consumption. In some examples, the VAD 550 process can run on a Digital Signal Processor (DSP) co-processing unit or Low Power Island (LPI), enabling the main CPU to sleep or transition to a low-power state at times when voice activity is not detected.

As further shown in Figure 5, the voice processor 560 includes an AEC 564, a spatial processor 566, and one or more buffers 568. In operation, the AEC 564 receives the detected sound *S_{D}* and filters or otherwise processes the sound to suppress echoes and/or to otherwise improve the quality of the detected sound *S_{D}.* That processed sound may then be passed to the spatial processor 566.

The spatial processor 566 is typically configured to analyze the detected sound *S_{D}* and identify certain characteristics, such as a sound's amplitude (e.g., decibel level), frequency spectrum, directionality, etc. In one respect, the spatial processor 566 may help filter or suppress ambient noise in the detected sound *S_{D}* from potential user speech based on similarities and differences in the constituent channels 562 of the detected sound *S_{D},* as discussed above. As one possibility, the spatial processor 566 may monitor metrics that distinguish speech from other sounds. Such metrics can include, for example, energy within the speech band relative to background noise and entropy within the speech band - a measure of spectral structure - which is typically lower in speech than in most common background noise. In some implementations, the spatial processor 566 may be configured to determine a speech presence probability, examples of such functionality are disclosed in U.S. Patent Application No. 15/984,073, filed May 18, 2018, titled "Linear Filtering for Noise-Suppressed Speech Detection," and U.S. Patent Application No. 16/147,710, filed September 29, 2018, and titled "Linear Filtering for Noise-Suppressed Speech Detection via Multiple Network Microphone Devices".

The wake-word engine 570 is configured to monitor and analyze received audio to determine if any wake words are present in the audio. The wake-word engine 570 may analyze the received audio using a wake word detection algorithm. If the wake-word engine 570 detects a wake word, a network microphone device may process voice input contained in the received audio. Example wake-word detection algorithms accept audio as input and provide an indication of whether a wake word is present in the audio. Many first- and third-party wake word detection algorithms are known and commercially available. For instance, operators of a voice service may make their algorithm available for use in third-party devices. Alternatively, an algorithm may be trained to detect certain wake-words.

In some examples, the wake-word engine 570 runs multiple wake word detection algorithms on the received audio simultaneously (or substantially simultaneously). As noted above, different voice services (e.g. AMAZON's Alexa^{®}, APPLE's Siri^{®}, MICROSOFT's Cortana^{®}, GOOGLE'S Assistant, etc.) each use a different wake word for invoking their respective voice service. To support multiple services, the wake-word engine 570 may run the received audio through the wake word detection algorithm for each supported voice service in parallel. In such examples, the network microphone device 103 may include VAS selector components 574 configured to pass voice input to the appropriate voice assistant service. In other examples, the VAS selector components 574 may be omitted. In some examples, individual NMDs 103 of the MPS 100 may be configured to run different wake word detection algorithms associated with particular VASes. For example, the NMDs of playback devices 102a and 102b of the Living Room may be associated with AMAZON's ALEXA^{®}, and be configured to run a corresponding wake word detection algorithm (e.g., configured to detect the wake word "Alexa" or other associated wake word), while the NMD of playback device 102f in the Kitchen may be associated with GOOGLE's Assistant, and be configured to run a corresponding wake word detection algorithm (e.g., configured to detect the wake word "OK, Google" or other associated wake word).

In some examples, a network microphone device may include speech processing components configured to further facilitate voice processing, such as by performing voice recognition trained to recognize a particular user or a particular set of users associated with a household. Voice recognition software may implement voice-processing algorithms that are tuned to specific voice profile(s).

In operation, the one or more buffers 568 - one or more of which may be part of or separate from the memory 213 (Figure 2A) - capture data corresponding to the detected sound *S_{D}.* More specifically, the one or more buffers 568 capture detected-sound data that was processed by the upstream voice activity detector 550, AEC 564, and spatial processor 566.

In general, the detected-sound data form a digital representation (i.e., sound-data stream), *S_{DS},* of the sound detected by the microphones 222. In practice, the sound-data stream *S_{DS}* may take a variety of forms. As one possibility, the sound-data stream *S_{DS}* may be composed of frames, each of which may include one or more sound samples. The frames may be streamed (i.e., read out) from the one or more buffers 568 for further processing by downstream components, such as the wake-word engine 570 and the voice extractor 572 of the NMD 503.

In some implementations, at least one buffer 568 captures detected-sound data utilizing a sliding window approach in which a given amount (i.e., a given window) of the most recently captured detected-sound data is retained in the at least one buffer 568 while older detected-sound data are overwritten when they fall outside of the window. For example, at least one buffer 568 may temporarily retain 20 frames of a sound specimen at given time, discard the oldest frame after an expiration time, and then capture a new frame, which is added to the 19 prior frames of the sound specimen.

In practice, when the sound-data stream *S_{DS}* is composed of frames, the frames may take a variety of forms having a variety of characteristics. As one possibility, the frames may take the form of audio frames that have a certain resolution (e.g., 16 bits of resolution), which may be based on a sampling rate (e.g., 44,100 Hz). Additionally, or alternatively, the frames may include information corresponding to a given sound specimen that the frames define, such as metadata that indicates frequency response, power input level, signal-to-noise ratio, microphone channel identification, and/or other information of the given sound specimen, among other examples. Thus, in some examples, a frame may include a portion of sound (e.g., one or more samples of a given sound specimen) and metadata regarding the portion of sound. In other examples, a frame may only include a portion of sound (e.g., one or more samples of a given sound specimen) or metadata regarding a portion of sound.

The voice processor 560 also includes at least one lookback buffer 569, which may be part of or separate from the memory 213 (Figure 2A). In operation, the lookback buffer 569 can store sound metadata that is processed based on the detected-sound data *S_{D}* received from the microphones 222. As noted above, the microphones 222 can include a plurality of microphones arranged in an array. The sound metadata can include, for example: (1) frequency response data for individual microphones of the array, (2) an echo return loss enhancement measure (i.e., a measure of the effectiveness of the acoustic echo canceller (AEC) for each microphone), (3) a voice direction measure; (4) arbitration statistics (e.g., signal and noise estimates for the spatial processing streams associated with different microphones); and/or (5) speech spectral data (i.e., frequency response evaluated on processed audio output after acoustic echo cancellation and spatial processing have been performed). Other sound metadata may also be used to identify and/or classify noise in the detected-sound data *S_{D}.* In at least some examples, the sound metadata may be transmitted separately from the sound-data stream *S_{DS},* as reflected in the arrow extending from the lookback buffer 569 to the network interface 224. For example, the sound metadata may be transmitted from the lookback buffer 569 to one or more remote computing devices separate from the VAS which receives the sound-data stream *S_{DS}.*

In any case, components of the NMD 503 downstream of the voice processor 560 may process the sound-data stream *S_{DS}.* For instance, the wake-word engine 570 can be configured to apply one or more identification algorithms to the sound-data stream *S_{DS}* (e.g., streamed sound frames) to spot potential wake words in the detected-sound *S_{D}.* When the wake-word engine 570 spots a potential wake word, the wake-word engine 570 can provide an indication of a "wake-word event" (also referred to as a "wake-word trigger") to the voice extractor 572 in the form of signal *S_{W}.*

In response to the wake-word event (e.g., in response to a signal *S_{W}* from the wake-word engine 570 indicating the wake-word event), the voice extractor 572 is configured to receive and format (e.g., packetize) the sound-data stream *S_{DS}.* For instance, the voice extractor 572 packetizes the frames of the sound-data stream *S_{DS}* into messages. The voice extractor 572 transmits or streams these messages, *M_{V}*, that may contain voice input in real time or near real time to a remote VAS, such as the VAS 190 (Figure 1B), via the network interface 224.

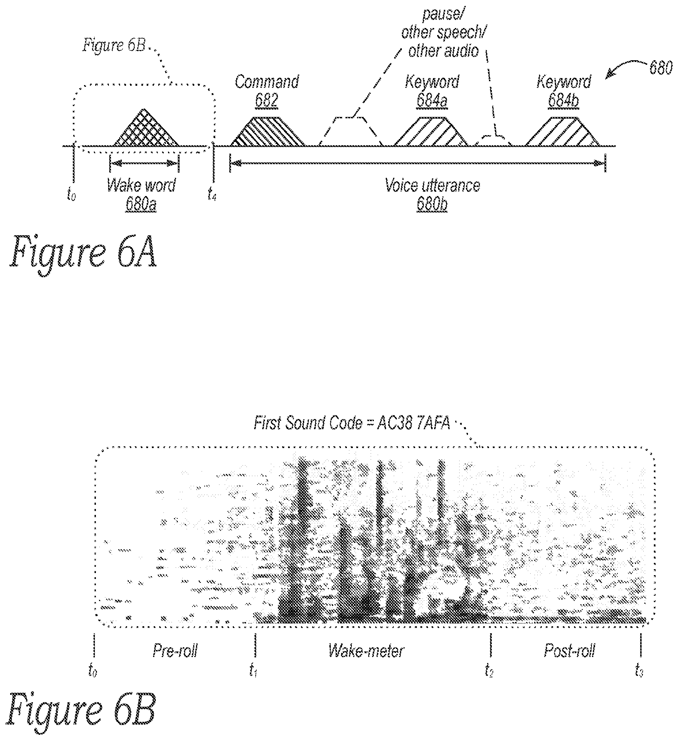

The VAS is configured to process the sound-data stream *S_{DS}* contained in the messages *M_{V}* sent from the NMD 503. More specifically, the VAS is configured to identify voice input based on the sound-data stream *S_{DS}.* Referring to Figure 6A, a voice input 680 may include a wake-word portion 680a and an utterance portion 680b. The wake-word portion 680a corresponds to detected sound that caused the wake-word event. For instance, the wake-word portion 680a corresponds to detected sound that caused the wake-word engine 570 to provide an indication of a wake-word event to the voice extractor 572. The utterance portion 680b corresponds to detected sound that potentially comprises a user request following the wake-word portion 680a.

As an illustrative example, Figure 6B shows an example first sound specimen. In this example, the sound specimen corresponds to the sound-data stream *S_{DS}* (e.g., one or more audio frames) associated with the spotted wake word 680a of Figure 6A. As illustrated, the example first sound specimen comprises sound detected in the playback device 102i's environment (i) immediately before a wake word was spoken, which may be referred to as a pre-roll portion (between times t₀ and t₁), (ii) while the wake word was spoken, which may be referred to as a wake-meter portion (between times t₁ and t₂), and/or (iii) after the wake word was spoken, which may be referred to as a post-roll portion (between times t₂ and t₃). Other sound specimens are also possible.

Typically, the VAS may first process the wake-word portion 680a within the sound-data stream *S_{DS}* to verify the presence of the wake word. In some instances, the VAS may determine that the wake-word portion 680a comprises a false wake word (e.g., the word "Election" when the word "Alexa" is the target wake word). In such an occurrence, the VAS may send a response to the NMD 503 (Figure 5) with an indication for the NMD 503 to cease extraction of sound data, which may cause the voice extractor 572 to cease further streaming of the detected-sound data to the VAS. The wake-word engine 570 may resume or continue monitoring sound specimens until another potential wake word, leading to another wake-word event. In some implementations, the VAS may not process or receive the wake-word portion 680a but instead processes only the utterance portion 680b.

In any case, the VAS processes the utterance portion 680b to identify the presence of any words in the detected-sound data and to determine an underlying intent from these words. The words may correspond to a certain command and certain keywords 684 (identified individually in Figure 6A as a first keyword 684a and a second keyword 684b). A keyword may be, for example, a word in the voice input 680 identifying a particular device or group in the MPS 100. For instance, in the illustrated example, the keywords 684 may be one or more words identifying one or more zones in which the music is to be played, such as the Living Room and the Dining Room (Figure 1A).

To determine the intent of the words, the VAS is typically in communication with one or more databases associated with the VAS (not shown) and/or one or more databases (not shown) of the MPS 100. Such databases may store various user data, analytics, catalogs, and other information for natural language processing and/or other processing. In some implementations, such databases may be updated for adaptive learning and feedback for a neural network based on voice-input processing. In some cases, the utterance portion 680b may include additional information, such as detected pauses (e.g., periods of non-speech) between words spoken by a user, as shown in Figure 6A. The pauses may demarcate the locations of separate commands, keywords, or other information spoke by the user within the utterance portion 680b.

Based on certain command criteria, the VAS may take actions as a result of identifying one or more commands in the voice input, such as the command 682. Command criteria may be based on the inclusion of certain keywords within the voice input, among other possibilities. Additionally, or alternatively, command criteria for commands may involve identification of one or more control-state and/or zone-state variables in conjunction with identification of one or more particular commands. Control-state variables may include, for example, indicators identifying a level of volume, a queue associated with one or more devices, and playback state, such as whether devices are playing a queue, paused, etc. Zone-state variables may include, for example, indicators identifying which, if any, zone players are grouped.

After processing the voice input, the VAS may send a response to the MPS 100 with an instruction to perform one or more actions based on an intent it determined from the voice input. For example, based on the voice input, the VAS may direct the MPS 100 to initiate playback on one or more of the playback devices 102, control one or more of these devices (e.g., raise/lower volume, group/ungroup devices, etc.), turn on/off certain smart devices, among other actions. After receiving the response from the VAS, the wake-word engine 570 the NMD 503 may resume or continue to monitor the sound-data stream *S_{DS}* until it spots another potential wake-word, as discussed above.

Referring back to Figure 5, in multi-VAS implementations, the NMD 503 may include a VAS selector 574 (shown in dashed lines) that is generally configured to direct the voice extractor's extraction and transmission of the sound-data stream *S_{DS}* to the appropriate VAS when a given wake-word is identified by a particular wake-word engine, such as the first wake-word engine 570a, the second wake-word engine 570b, or the additional wake-word engine 571. In such implementations, the NMD 503 may include multiple, different wake-word engines and/or voice extractors, each supported by a particular VAS. Similar to the discussion above, each wake-word engine may be configured to receive as input the sound-data stream *S_{DS}* from the one or more buffers 568 and apply identification algorithms to cause a wake-word trigger for the appropriate VAS. Thus, as one example, the first wake-word engine 570a may be configured to identify the wake word "Alexa" and cause the NMD 503 to invoke the AMAZON VAS when "Alexa" is spotted. As another example, the second wake-word engine 570b may be configured to identify the wake word "Ok, Google" and cause the NMD 503 to invoke the GOOGLE VAS when "Ok, Google" is spotted. In single-VAS implementations, the VAS selector 574 may be omitted.

In additional or alternative implementations, the NMD 503 may include other voice-input identification engines 571 (shown in dashed lines) that enable the NMD 503 to operate without the assistance of a remote VAS. As an example, such an engine may identify in detected sound certain commands (e.g., "play," "pause," "turn on," etc.) and/or certain keywords or phrases, such as the unique name assigned to a given playback device (e.g., "Bookcase," "Patio," "Office," etc.). In response to identifying one or more of these commands, keywords, and/or phrases, the NMD 503 may communicate a signal (not shown in Figure 5) that causes the audio processing components 216 (Figure 2A) to perform one or more actions. For instance, when a user says "Hey Sonos, stop the music in the office," the NMD 503 may communicate a signal to the office playback device 102n, either directly, or indirectly via one or more other devices of the MPS 100, which causes the office device 102n to stop audio playback. Reducing or eliminating the need for assistance from a remote VAS may reduce latency that might otherwise occur when processing voice input remotely. In some cases, the identification algorithms employed may be configured to identify commands that are spoken without a preceding wake word. For instance, in the example above, the NMD 503 may employ an identification algorithm that triggers an event to stop the music in the office without the user first saying "Hey Sonos" or another wake word.

### III. Spatial Mapping of Media Playback System Components

As noted previously, there are many instances in which identifying and maintaining the spatial distribution of component devices of a media playback system provide distinct benefits. Several examples of localization and spatial mapping of media playback system components are described below. In various embodiments, the number, arrangement, and configuration of the various devices within the media playback system can vary. Additionally or alternatively, the localization modalities employed by the various devices can vary. In at least some instances, the devices within the environment can be configured to utilize two or more localization modalities (e.g., ultra-wideband localization and sound-based localization).

### a. Example Spatial Mapping Architecture

Systems and methods described herein can be used to localize devices in networked device systems. In various examples, the localization processes described herein can be distributed across multiple devices (e.g., portable devices, stationary devices, remote devices, etc.). In some instances, an orchestrator device is designated to coordinate and schedule the localization sessions, and a mapper device is designated to collect and store signal information from the localization session participant devices. Orchestrator and mapper devices can be selected from the available devices of an MPS based on one or more of several factors, including (but not limited to) frequency of use or device specifications (e.g., number of processor cores, processor clock speed, processor cache size, non-volatile memory size, volatile memory size, etc.). For example, a particular player can be selected as an orchestrator or mapper device based on how long the processor has been idle, so as not to interfere with the operation of any other devices during playback (e.g., selecting a speaker sitting in a guest bedroom that is used infrequently). In certain embodiments, orchestrator and/or mapper devices can include a portable device that is being located.

In some examples, localizing a portable device (e.g., a portable playback device, a smartphone, a tablet, etc.) can be used to identify a relative location for the portable device based on a number of reference devices in an MPS. Reference devices can include stationary devices and/or portable devices. As the localizing of a portable device is not an absolute location, but rather a location relative to the locations of other reference devices, processes in accordance with many examples can be used to determine a nearest device, even when one or more of the reference devices is also portable. In some examples, the localization techniques described herein can be used to construct a spatial map of stationary devices without regard to portable devices within the environment.

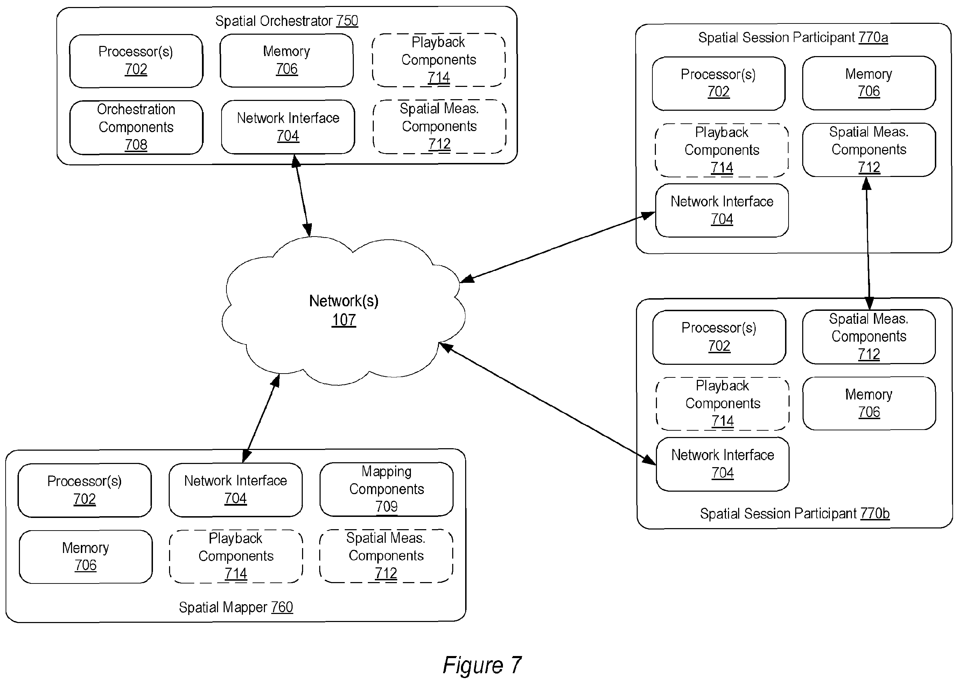

Figure 7 is a functional block diagram of spatial mapping components of a media playback system. As illustrated, the system includes a spatial orchestrator device 750, a spatial mapper device 760, and first and second spatial session participant devices 770a and 770b (collectively "participant devices 770"). Each of these devices can communicate with one another via one or more network(s) 107 (e.g., a LAN or WLAN). Each of these devices can be or include any one of the devices previously described herein (e.g., a playback device, network microphone device, controller device) or any other suitable device. Together, these devices can be used to construct a spatial map of the environment based at least in part on localization signals obtained via the participant devices 770.

The spatial orchestrator 750 can include some or all of the features of the various devices described above (e.g., playback device 102, network microphone device 103 or 503, controller device 104, etc.). As illustrated, the spatial orchestrator 750 can include orchestration components 708 in addition to one or more processor(s) 702, a network interface 704, and a memory 706. The spatial orchestrator 750 can optionally include playback components 714 (e.g., audio transducer, amplifier, etc.) and/or spatial measurement components 712. In operation, the spatial orchestrator 750 may be responsible for coordinating and scheduling localization sessions in which the various participant devices 770 transmit and receive localization signals. This coordination can be effected via the orchestration components 708. The spatial orchestrator 750 may maintain a list of network devices within the environment, optionally with state information for the various devices. The spatial orchestrator may use this list to generate instructions for localization sessions, including scheduling particular sessions in a desired order. In some cases, the spatial localization sessions can be performed sequentially, while in other cases they can be performed at least partially in parallel, particularly if there are known discrete clusters of devices do not overlap (e.g., upstairs and downstairs groups).

The spatial mapper 760 can likewise include some or all of the features of the various devices described above (e.g., playback device 102, network microphone device 103 or 503, controller device 104, etc.). As shown in Figure 7, the spatial mapper 760 can include mapping components 709 in addition to one or more processor(s) 702, a network interface 704, and a memory 706. The spatial mapper 760 can optionally include playback components 714 (e.g., audio transducer, amplifier, etc.) and/or spatial measurement components 712. In operation, the spatial mapper 760 can receive spatial measurement parameters from the participant devices 770 (e.g., relative or absolute measurements between various device pairs). Based on these spatial measurement parameters, the spatial mapper 760 can construct a spatial map using the mapping components 709. The spatial map can be maintained and updated periodically according to a schedule or in response to various localization update events as instructed by the orchestrator 750. In some examples, the resulting spatial map can be transmitted to the other devices of the system such that each device maintains a local copy of the map that is updated when a new version is received from the spatial mapper 760. In alternative configurations, the spatial mapper 760 can maintain the spatial map which is then used to change a state or otherwise modify operation of other devices within the environment.

Spatial session participant devices 770 can also include some or all of the features of the various devices described above (e.g., playback device 102, network microphone device 103 or 503, controller device 104, etc.). As shown in Figure 7, the participant devices 770 can each include spatial measurement components 712 in addition to one or more processor(s) 702, a network interface 704, and a memory 706. The participant devices 770 can optionally also include playback components 714 (e.g., audio transducer, amplifier, etc.).

The spatial measurement components 712 can take the form of hardware and software that enable transmission and/or reception of localization signals, as well as processing the detected signals to obtain spatial measurement parameters. In some examples, the participant devices 770 can transmit "raw" or unprocessed localization data to the mapper 760 for processing and construction. In other cases, the participant devices 770 may perform some processing of the spatial measurements to obtain, e.g., inter-device distances or other information which is then transmitted to the mapper device 760. In various examples, the localization signals can take the form of electromagnetic signals (e.g., laser, ultra-wideband (UWB), WI-FI, etc.), sound signals (e.g., audible or ultrasonic sound signals), or any other suitable localization signals. The spatial measurement components 712 can, in various examples, include transmitters (e.g., optical source, antenna, audio transducer) and/or receivers (e.g., optical detector, antenna, microphone). In at least some instances, each participant device includes both transmitter and receiver components, such that each device may, in turn, operate as a localization session manager (e.g., transmitter) and a localization session managee (e.g., receiver).

In operation, for a particular localization or spatial measurement session, one participant device 770a can serve as a session manager and one or more other participant devices (e.g., participant device 770b) can serve as a session managee. The manager can initiate transmission of localization signals (e.g., in response to instructions from the orchestrator 750), and the managee can receive the localization signals (and optionally transmit responses, as in the case of two-way UWB ranging). For example, the first participant device 770a can transmit a localization signal (e.g., a UWB pulse, laser pulse, sound signal, a time-of-flight signal, etc.) and the second participant device 770b can detect the localization signal and obtain a spatial measurement parameter. This measurement parameter can be an absolute distance, relative distance (e.g., if there are two recipient devices, a relative determination can be made that one device is further than the other from the transmitting device), an angular orientation, or other such spatial measurement parameter. In at least some embodiments, both devices may be capable of receiving and detecting localization signals.

Although two participant devices 770 are shown here for simplicity, in various examples there may be any number of participant devices within the environment. Additionally, the orchestrator 750 and/or mapper 760 may be the same device as any one of the participant devices 770. In some examples, a single device may serve as the orchestrator 750, mapper 760, and a session participant 770.

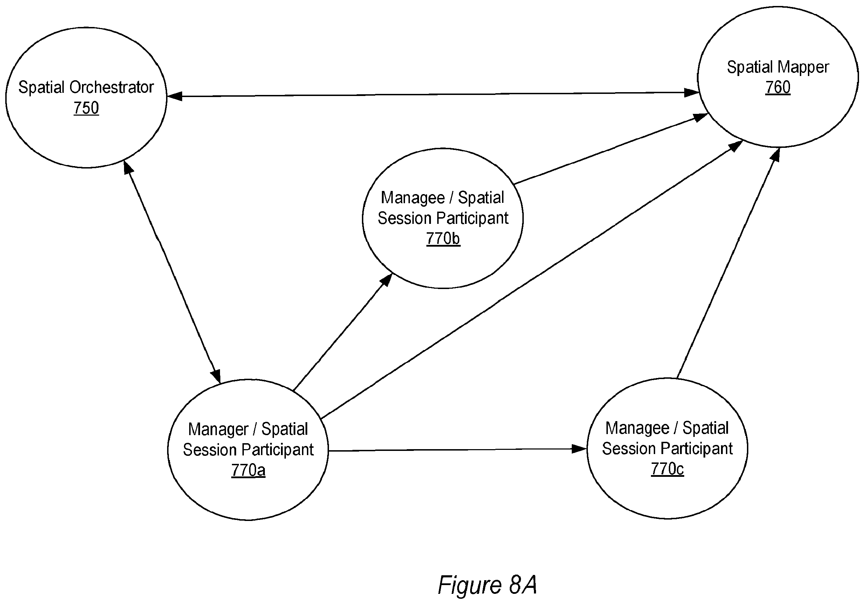

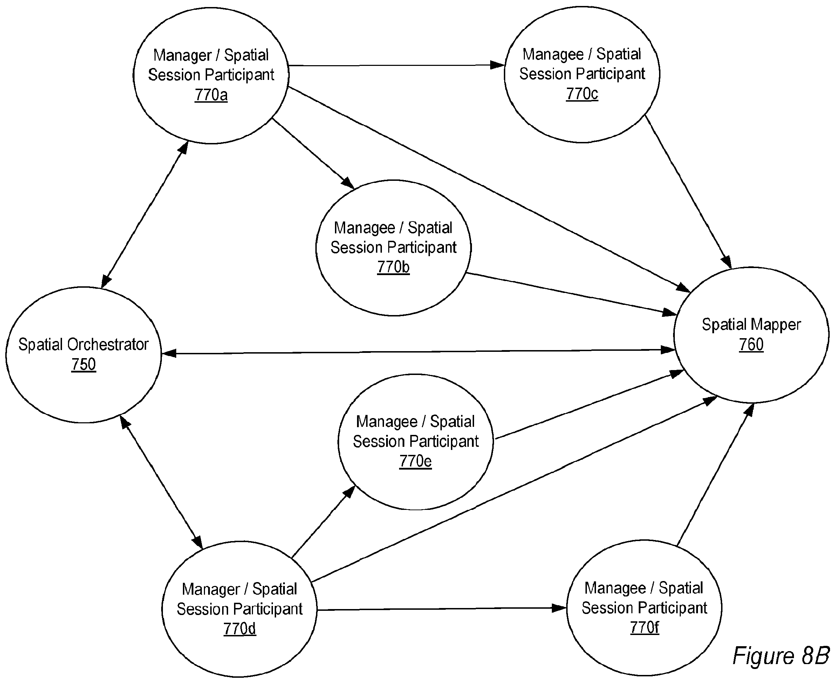

Depending on the number and type of devices within an environment, the topology and configuration of the spatial localization roles may vary. For example, as shown in Figure 8A, a spatial orchestrator 750 is in communication with a single spatial session participant device 770a, which serves as a manager device for localization session(s) with second participant device 770b and third participant device 770c (each of which are managee devices). The three participant devices 770a-c and the orchestrator 750 are each in communication with the spatial mapper 760. Figure 8B illustrates the same configuration as Figure 8A but with additional participant devices 770d, 770e, and 770f included. Again, the manager device 770d receives instructions from the orchestrator 750 and emits localization signals to be detected via the managee devices 770e and 770f, which are then communicated to the mapper device 760 for construction of the spatial map.

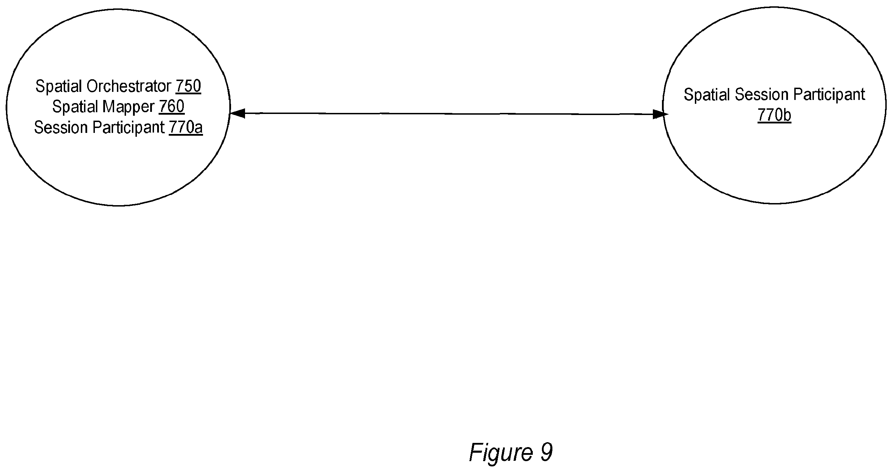

Figure 9 illustrates another example configuration of devices within an environment. As shown, the spatial orchestrator 750, spatial mapper 760, and session participant 770a are all combined within a single device (e.g., a single playback device) and are in wireless communication with a second spatial session participant 770b. In alternative arrangements, the orchestrator 750 may be combined with (e.g., disposed within a common housing with or otherwise integrated with) any other device within the environment or may be a standalone device that does not itself participate in localization sessions. Similarly, the mapper 760 may be combined with any other device within the environment, or may be a standalone device that does not itself participate in localization sessions.

### b. Example Spatial Localization Modalities

The particular localization signals emitted and received by the devices within the environment can take any suitable form. In various examples, the localization signals can be electromagnetic signals (e.g., laser, ultra-wideband (UWB), WI-FI, etc.), sound signals (e.g., audible or ultrasonic sound signals), or any other suitable localization signals.

In the case of optical localization, the transmitter device can be equipped with a laser or other suitable light source configured to emit a signal (e.g., a series of pulses) to be detected via a receiver device. The receiver device can therefore be equipped with a detector such as a photodiode or other suitable component configured to detect incoming optical signals. By comparing the time that the signal(s) are received with the time of transmission, a time-of-flight calculation can be performed to obtain a spatial measurement parameter, for example an absolute distance between the transmitter device and the receiver device. Additionally or alternatively, two-way ranging can be performed in which the receiver devices emits an optical signal (e.g., a laser pulse) back to the initial transmitter device, with the time-of-flight calculated based on the total time elapsed. In various examples, some or all of the devices within the environment can be equipped with both an optical transmitter and an optical receiver, such that each device can both transmit and receive optical localization signals. In some instances, a receiver device can be configured to reflect incoming optical signals back to the transmitter device, which can receive the reflected signal and calculate the time-of-flight between transmission and receipt of the reflected signal. This time-of-flight will correspond to the time taken to traverse double the distance between the two devices, and accordingly can be used to obtain the spatial measurement parameter.

In some implementations, the wireless localization signals can take the form of ultra-wideband (UWB) wireless signals. UWB can be defined as wireless communication with greater than 20% of the center frequency or 500 MHz, and may generally be between about 3.1 and 10.6 GHz. Additional details relating to UWB can be found in IEEE 802.15.4-2020, "IEEE Standard for Low-Rate Wireless Networks". UWB uses short pulses of very low energy radio waves for short-range communication including localization and tracking. UWB techniques for precise localization of devices such as smartphones and other smart devices are known in the art. In operation, a transmitter device and a receiver device can each have a wireless antenna configured to transmit and receive, respectively, UWB signals and to calculate a time-of-flight between transmission and reception. In various examples, some or all of the devices within the environment can be configured to both transmit and receive UWB signals, such that each device can both transmit and receive UWB localization signals.

In some examples, a receiver device can include two antennas that are spatially separated within the device. By using two antennas and calculating a time-of-flight for each, both the distance and the angular orientation of the receiver device with respect to the transmitter device can be obtained. Provided that the distance between the two receiver antennas is less than or equal to one half wavelength λ of the radio signals transmitted from the transmitter device, the path difference between the two receiver antennas will be between -λ/2 and + λ/2. By measuring the phase of arrival at each antenna, the phase difference going from -180 degrees to + 180 degrees can also give a path difference varying from -λ/2 and + λ/2. Accordingly, the orientation determination can be based on the relative phases of the received signal, while the distance determination can be based on the time-of-flight between the transmitter device and the receiver antennas. In some examples, UWB calculations will depend in part on the temperature, as the phase difference can vary with temperature.

In some examples, UWB localization can include two-way ranging methods. This approach can be useful when clock synchronization between the transmitter and receiver devices is not available or insufficiently precise. In this configuration, a first device transmits a UWB localization signal which is received by a second device after a first time of flight T_{tof}. After a delay of time T_{reply1}, the second device then transmits a second UWB localization signal back to the first device, which is received after a second time of flight T_{tof} (which should be identical to the first T_{tof}). By subtracting the known delay T_{reply1} and dividing by two, the distance between the two devices can be calculated. In some cases, a further signal can be transmitted from the first device to the second device, such as in the case of double-sided two-way ranging. Additional details regarding UWB localization can be found in Lukasz Zwirello, Tom Schipper, Marlene Harter, Thomas Zwick, "UWB Localization System for Indoor Applications: Concept, Realization and Analysis," Journal of Electrical and Computer Engineering, vol. 2012, Article ID 849638, 11 pages, 2012.

Another localization technique involves using WI-FI signals, in which case a received signal strength indicator (RSSI) value as measured at the receiver device can provide an indication of distance from the transmitter device. In certain embodiments, signals are transmitted when each device (e.g., network players, NMDs, etc.) performs a wireless (e.g., WI-FI) scan. Wireless scans in accordance with numerous embodiments can include broadcasting a first wireless signal that causes other wireless devices to respond with a second signal. In a number of embodiments, wireless radios in each device can provide, as a result of a wireless scan, signal information, which can include (but is not limited to) an indication of which devices responded, an indication of how long ago the scan was performed/how long ago a device responded, and/or received signal strength indicator (RSSI) values associated with the response from a particular device. Signal information in accordance with certain embodiments is gathered in pairs between all of the devices.

In some examples, these devices can scan periodically, allowing the devices to maintain a history of signals received from the other devices. Reference and/or portable devices in accordance with several embodiments can scan for known devices and collect characteristics (e.g., RSSI) in a buffer (e.g., a ring buffer) and calculate statistics (e.g., weighted averages, variances, etc.) based on a history of collected signal characteristics. In some embodiments, signal characteristics and/or calculated statistics can be identified by each of the devices, pre-processed, and transmitted to a mapper device. In many embodiments, identified signal characteristics and/or calculated statistics of the signals can be stored in a matrix, that stores values for a given characteristic (e.g., RSSI).

In some examples, the measured signal characteristics can be normalized to estimate signal path characteristics. In many embodiments, normalizing the data can help to account for differences in the constructions of the WI-FI radios and front-end circuitries of each device based on the assumption that RSSI values associated with a signal transmitted from point A to point B should be approximately equal to the RSSI values associated with the same signal being transmitted in the opposite direction from point B to point A. Normalizing signal characteristics in accordance with some embodiments can include calculating an average of the sent and received signals of a signal path between two devices. Processes in accordance with numerous embodiments can compare RSSI values associated with each pair of signal paths (i.e., paths to and from another device) to identify an offset in RSSI values. In certain embodiments, identified offsets in RSSI values can be used as a basis to normalize the values to account for the differences in the construction of the radios.

From an intuitive standpoint, the stronger the RSSI values associated with a given signal path, the shorter the length of the signal path. For example, if the RSSI values associated with the signal path from a roaming device to a first playback device are high, the roaming device is likely near the first playback device. Because RSSI values can be obtained for a large number of signal paths, processes in accordance with a variety of embodiments can layer on additional logic to confirm the relative locations of various devices. For example, if a roaming device is actually quite close to a first playback device, the RSSI values associated with the signal path from the roaming device to a second playback device should be substantially similar to the values associated with the signal path from the first player playback device to the second playback device. Similarly, if the roaming device is actually quite close to the first playback device, the RSSI values for the path from the remote device to a third playback device should be substantially similar to the RSSI values for the path from the first playback device to the third playback device. Accordingly, processes in accordance with numerous embodiments can analyze RSSI values associated with multiple different signal paths in an MPS to come up with a probability that a roaming device is near a given stationary device and/or to construct a spatial map. Additional details of localization using such WI-FI signals can be found in commonly owned U.S. Patent Publication No. 2021/0099736.

In yet another example, sound signals can be used to localize devices within an environment. For example, a first device can emit a signature sound signal that can be detected by a microphone of a second device. The sound signal can be audible or inaudible (e.g., ultrasonic). If the transmitter and receiver devices are synchronized, a time-of-flight can be calculated between the transmission and receipt of the sound signal. Based on an estimated speed of sound in the environment, a distance measurement can therefore be obtained. In various examples, some or all of the devices within the environment can be configured to both transmit and receive sound localization signals.

In numerous embodiments, the captured signal information (whether optical, UWB, WI-FI, sound signal, or otherwise) is noisy data that may need to be cleaned. Cleaning noisy data in accordance with various embodiments can include computing a weighted average of historic values for each signal path to reduce some high-frequency noise. In a number of embodiments, the weighting factor can be based on timestamps of each value (e.g., weighting weight recent values more heavily and reducing the weight of older values). Timestamps in accordance with various embodiments can include timestamps for when a signal is detected at a receiver and/or transmitted from a sender.

In addition to inter-device measurements, an accelerometer, gyroscope, or other motion-sensor device carried by a device can be used to detect motion and/or orientation of the device. In some cases, this motion information can be used in conjunction with the other localization signals to construct the spatial map. Additionally or alternatively, movement data obtained via an accelerometer or other motion-sensor can be used to trigger an updated spatial mapping process.

### c. Example Processes for Generating Spatial Maps

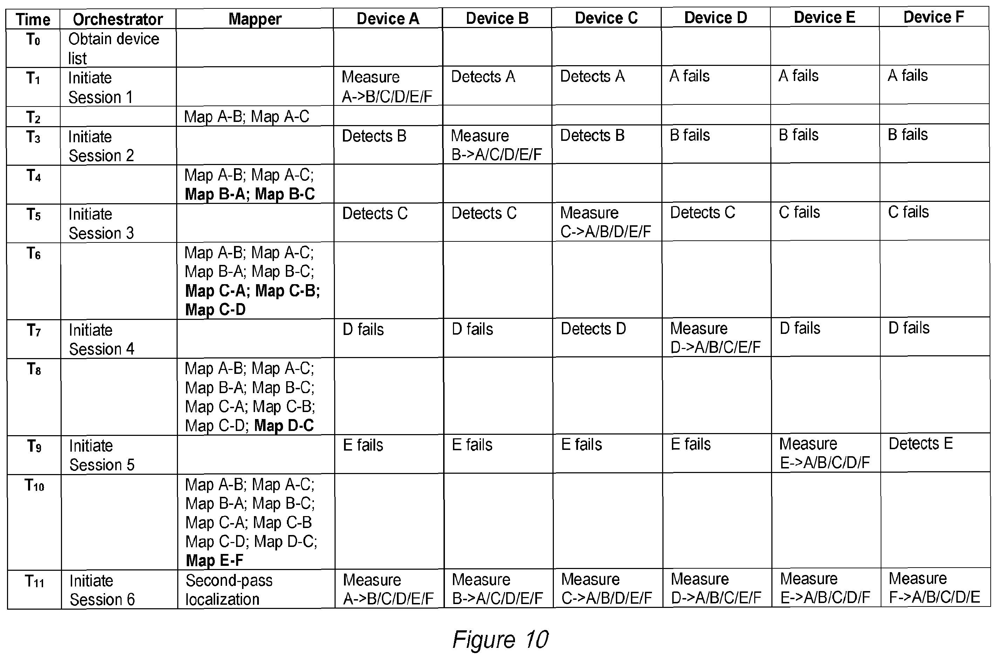

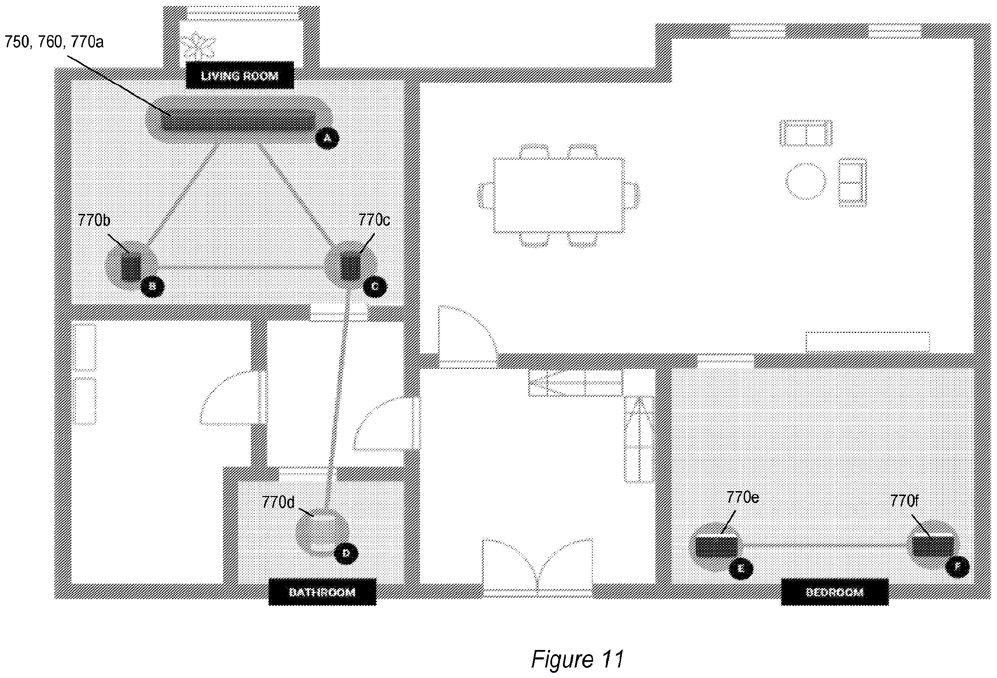

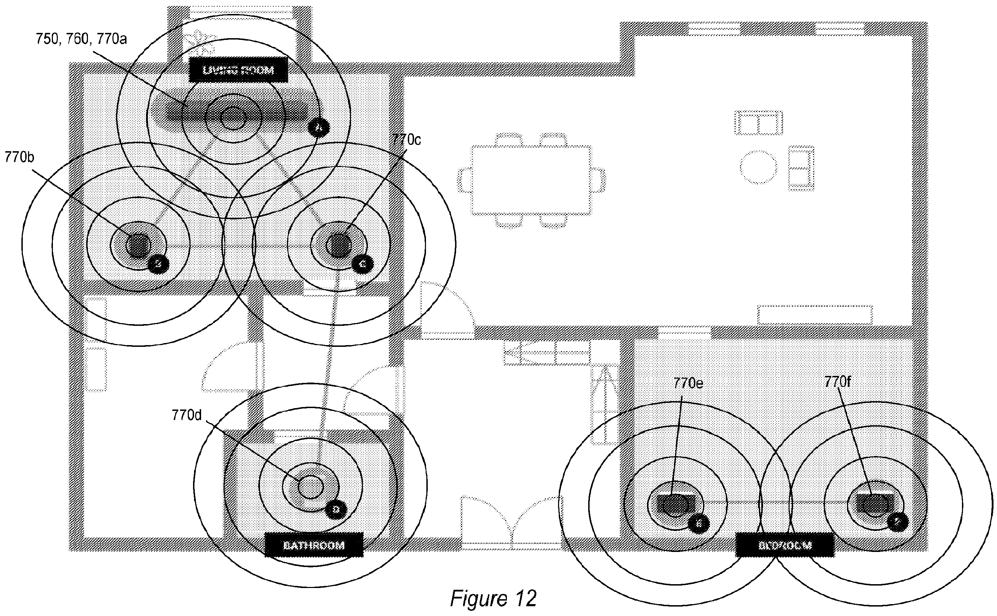

Figure 10 is a table illustrating an example sequence for obtaining localization measurements and constructing a spatial map of a media playback system within an environment. Figures 11 and 12 are example plan views of an environment including multiple devices to be spatially mapped. In Figure 11, line-of-sight localization signals are illustrated (e.g., localization signals that generate both direction and distance information such as optical, UWB, etc.), and in Figure 12, omnidirectional localization signals are illustrated (e.g., localization signals that generate distance information without a directional component, such as WI-FI, sound signals, etc.). In both Figures 11 and 12, the Living Room includes device A serving as the orchestrator device 750, mapper device 760, and spatial session participant device 770a. In various examples, as noted previously, these roles may be served by different and discrete devices. The Living Room further includes device B serving as a second participant device 770b and device C serving as a third participant device 770c. Device D is a fourth participant device 770d located in the Bathroom, and devices E and F are the fifth and sixth participant devices 770e and 770f, located in the Bedroom. In various examples, some or all of the devices A-F can be playback devices.

Referring to Figures 10 and 11 together, at time T0, the orchestrator obtains a device list. This can include all network devices within the environment, optionally along with other metadata such as assigned room, device capabilities, grouping status, etc. At time T1, the orchestrator initiates localization session 1. In this session, device A attempts to measure distance to each of the other devices (B, C, D, E, and F). This can involve, for example, device A transmitting a localization signal while the other devices wait for detection of the signal. In this example, devices B and C detect the localization signal of device A. Devices D, E, and F do not detect the signal because walls block transmission of the localization signal from device A. Any or all of devices A, B, and C may then transmit the raw localization data to the mapper, or alternatively any or all of these devices may obtain spatial measurement parameters such as inter-device measurements which are then transmitted to the mapper. At time T2, the mapper can initiate construction of a spatial map using the data available. At this time, the data may involve only distance between devices A and B and the distance between devices A and C.

At time T3, the orchestrator initiates localization session 2, in which device B transmits a localization signal while the remaining devices wait for detection of the signal. Devices A and C detect the localization signal, while devices D, E, and F do not, due to the obstruction of the walls between device B and these recipient devices. Again, the spatial measurement parameters obtained based on the localization signals transmitted by device B are transmitted to the mapper, which continues to construct the map at time T4. At this stage, the mapper has two measurements for the distance between A and B. These measurements can be compared and averaged or otherwise combined to arrive at a single value. Alternatively, the more recent measurement can prevail, as this may indicate that one of the devices has moved since the previous mapping.

At time T5, the orchestrator initiates session 3, which involves device C serving as session manager and transmitting a localization signal to the remaining devices. Here, devices A and B detect the localization signal, as well as device D (due to the direct line-of-sight between devices C and D as shown in Figure 11). Meanwhile, devices E and F do not detect the signal. Spatial measurement parameters are obtained and transmitted to the mapper which, at time T6, continues constructing the map by incorporating the new localization information. At this point, sufficient inter-device measurements have been obtained to triangulate the relative position of some of the devices, at least with respect to devices A, B, and C. Additionally, if the localization signals include directional information (e.g., as in the case of optical or UWB localization signals), the relative positions of the devices can be determined in addition to the absolute distances between them.

At time T7, the orchestrator initiates session 4, in which device D transmits a localization signal that is successfully detected by only device C. Here the paths to the remaining devices are blocked by walls and so no other device is able to detect the localization signal. The single measurement information (the D-C distance and optionally orientation) is transmitted to the mapper, which at time T8 updates the spatial map with another measurement of the distance between devices C and D.

At time T9, the orchestrator initiates session 5, in which device E transmits a localization signal which is detected only by device F and not by any of the other devices. The spatial measurement parameter obtained from this session is transmitted to the mapper which continues constructing the spatial map at time T10. Optionally, another session can be conducted in which device F is the manager and transmits a localization signal. However, at this stage, the system has obtained inter-device measurements for each device and at least one neighboring device, thereby providing adequate basis for construction of a spatial map.

At time T11, the orchestrator initiates session 6, which is a second-pass localization session that may involve multiple sub-sessions. In some cases, overall accuracy and performance of the localization process can be improved by leveraging different types of localization modalities. For example, if sessions 1-5 use UWB localization signals, session 6 may instead use WI-FI or audio signals. As shown schematically in Figure 11, such omnidirectional signals may not provide directional information, however they may propagate differently than the first localization modality, including passing through walls or other surfaces that blocked other localization signals. In one example, UWB may not penetrate walls to reach devices in an adjacent room, but sound signals may penetrate an adjacent wall. By performing a second-pass localization and layering the newly obtained spatial measurement information on top of the first-pass localization, overall accuracy and completeness of the spatial map can be improved. In the illustrated example, each device transmits an omnidirectional localization signal. This can be done simultaneously (e.g., with different devices emitting different frequencies of sound so as to distinguish them from one another) or sequentially so as to avoid crosstalk.

In addition to determining the locations of devices within the environment, in some instances the spatial map can detect other features of the environment. For example, edge detection can be used to determine the locations of walls, doorways, hallways, etc. These edges may be reflective to certain localization signals, and as such may be detected by analyzing the received signals. In some instances, construction of the spatial map can include identifying various objects in the environment, such as reflective or absorbent surfaces within the environment.

### d. Event Detection and User Experiences Based on Spatial Mapping

In addition to determining the static locations of devices within the environment, generating and maintaining a spatial map can identify various events. For example, if the spatial map varies from one time to another, the variation can be evaluated and, in some instances, an event can be detected based on the determined variation. One such event detection involves movement of devices within the environment. For example, if a playback device gets moved (e.g., to a different room, or just shifted slightly from its previous location), the spatial map constructed prior to the move will differ from the spatial map constructed after the move. In response to detecting this movement, various actions may be taken, such as adjusting calibration parameters, automatically grouping or ungrouping devices, etc.

In various examples, changes within the environment may be detected based on changes to the spatial map over time. For example, if furniture is moved from one location to another, the localization measurements may differ (e.g., if a couch is moved into the line-of-sight between two playback devices, the localization signals transmitted between them may no longer reach the other device, or may be slowed down or otherwise distorted. Additionally, a person entering or leaving a room may be detected based on the localization signals obtained over time. The number of people in a room may also be determined or estimated based on changes in the localization measurements obtained over time.

In some cases, beyond (or in addition to) localizing a device, systems and methods disclosed herein can be used to determine a layout or state of a system, such as (but not limited to) a home theater (HT) system and an MPS. In several embodiments, playback devices of a HT system can include a portable satellite speaker devices that can be moved and used in other contexts (e.g., for travel, at another location in the home, etc.). When returning the playback devices to their original positions, the positions of the satellite speakers can be different from the original placement. Processes in accordance with some embodiments can be used to detect when the layout (e.g., position and/or orientation) of the satellite speakers has changed and can react accordingly, e.g., by modifying parameters for the speakers and/or providing notifications to a user regarding the misplaced speakers.

In some examples, the original layout of the satellite speakers can be determined through a calibration process for optimizing the sound experience. Processes in accordance with a variety of embodiments can determine a difference between a current layout and the original layout and can recommend recalibrating the system when the difference exceeds a given threshold. When the difference does not exceed the threshold, processes in accordance with some embodiments can provide instructions to modify the layout and/or modify parameters of the devices to account for the changed layout.

In some cases, the layout of the devices does not change, but rather the state of the space between the devices changes. For example, individuals may enter the space, move between different positions in the space, rearrange furniture in the space, etc. In several embodiments, changes in the space state can be determined based on signal patterns measured between devices of the space. Detected changes in space state can be used to modify devices of the system (e.g., modifying playback parameters, configuration, etc.).

Based on the spatial map, the state of one or more playback devices may be modified or updated (e.g., updating a state variable of one or more playback devices). State variables can include (but are not limited to) which channel is being input to the playback device, equalizer settings, volume, microphone sensitivities, etc. In a variety of embodiments, processes can determine when a layout has changed from an original calibrated layout based on measured signal patterns, and, when the change exceeds a threshold, can recommend recalibration of the system. In numerous embodiments, a single coordinator device can determine settings for each playback device in a system based on the measured signal patterns. Additionally or alternatively, each playback device can use the measured signal patterns to determine an appropriate modification to its own settings.

In some examples, a spatial map can be used as an input for a generative media engine or module that is configured to produce generative media content. Generative media content is content that is dynamically synthesized, created, and/or modified based on an algorithm, whether implemented in software or a physical model. The generative media content can change over time based on the algorithm alone or in conjunction with contextual data (e.g., user sensor data, environmental sensor data, occurrence data, or a spatial map as described herein). In various examples, such generative media content can include generative audio (e.g., music, ambient soundscapes, etc.), generative visual imagery (e.g., abstract visual designs that dynamically change shape, color, etc.), or any other suitable media content or combination thereof. The spatial map can facilitate construction of generative media content. Additionally, detecting the presence of one or more users within the environment can also be used as an input for a generative media engine. Additional details regarding generative media content based on contextual information can be found in commonly owned U.S. Patent Application No. 17/302,690, filed May 10, 2021, titled "Playback of Generative Media Content".

In various examples, the spatial awareness achieved by generating, maintaining, and updating a spatial map of devices within an environment can be used to enable beneficial user experiences. In some implementations, for example, various playback devices can be automatically grouped or ungrouped for synchronous audio playback depending on their locations as determined by the spatial map. In another implementation, arbitration for voice control (i.e., determining which device within an environment is responsible for obtaining user's voice input and/or for providing audible output to a user) can be based at least in part on information obtained via the spatial mapping process. Additionally or alternatively, the particular device assigned responsibility for receiving the user's voice input and/or providing output to the user can vary over time as a user moves through the environment, thereby appearing to the user as though the voice assistant "follows" the user around her environment. This can be particularly useful in multi-turn interactions, in which a user may ask a voice assistant a question, receive a response, and ask a follow-up question or issue a related command.

### f. Example Methods for Spatial Mapping

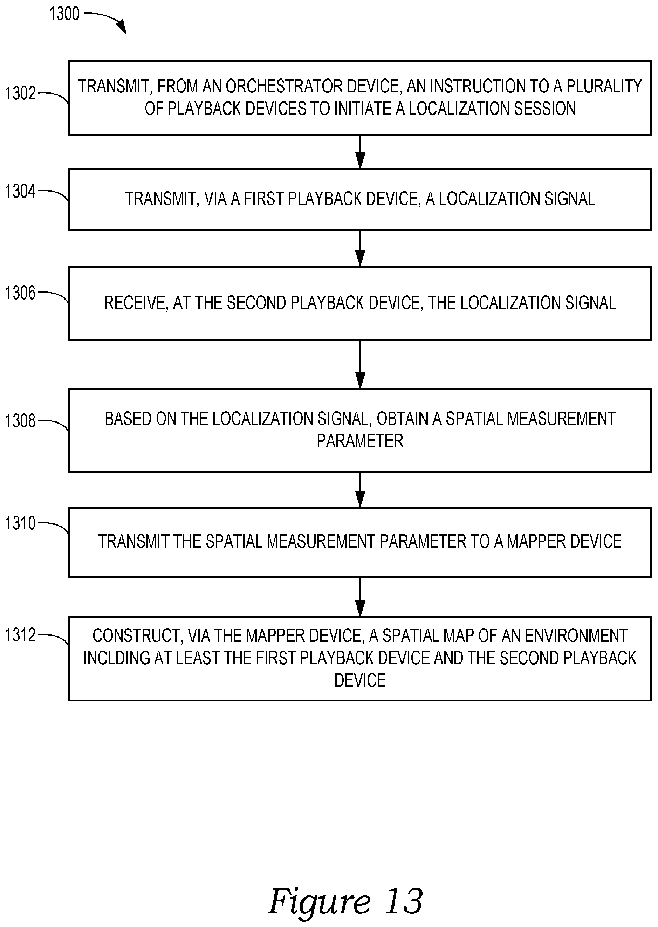

Figures 13-17 illustrate flow diagrams of example processes for spatial mapping of component devices of a media playback system. These processes can be implemented by any of the playback devices, NMDs, or controller devices disclosed and/or described herein, or any other device now known or later developed. Various examples of the processes described herein include one or more operations, functions, and actions. Although blocks are illustrated in sequential order, these blocks may also be performed in parallel, and/or in a different order than the order disclosed and described herein. Also, the various blocks may be combined into fewer blocks, divided into additional blocks, and/or removed based upon a desired implementation.

Figure 13 illustrates a process 1300 for constructing a spatial map of component devices within an environment. The process 1300 begins in block 1302 with transmitting, from an orchestrator device, an instruction to a plurality of playback devices to initiate a localization session. The plurality of playback devices can include at least a first playback device and a second playback device.

In block 1304, the first playback device transmits a localization signal, and in block 1306, the second playback device receives the localization signal. In various examples, the localization signal can take the form of a wireless electromagnetic signal (e.g., WI-FI, UWB, laser, etc.), a sound signal (e.g., an audible or ultrasonic sound signal), or other suitable localization signal. In block 1308, based on the localization signal, a spatial measurement parameter is obtained. The spatial measurement parameter can include one or more of: an absolute distance between the first and second playback devices, a relative distance between the first and second playback devices, an angular orientation between the first and second playback devices, or any combination thereof.

The process 1300 continues in block 1310 with transmitting the spatial measurement parameter to a mapper device. And in block 1312, the mapper device constructs a spatial map of the environment. The spatial map includes at least the first playback device and the second playback device. In various examples, there may be any number of playback devices within the environment, and their positions can be included within the spatial map. As described previously, the spatial map can be maintained via the mapper device and/or can be broadcast to other devices of the MPS and/or one or more remote computing devices. In various examples, the orchestrator device can also be the first playback device, the second playback device, the mapper device, or any other suitable device within the environment. Similarly, the mapper device can also be the first playback device, the second playback device, the orchestrator device, or any other suitable device within the environment.

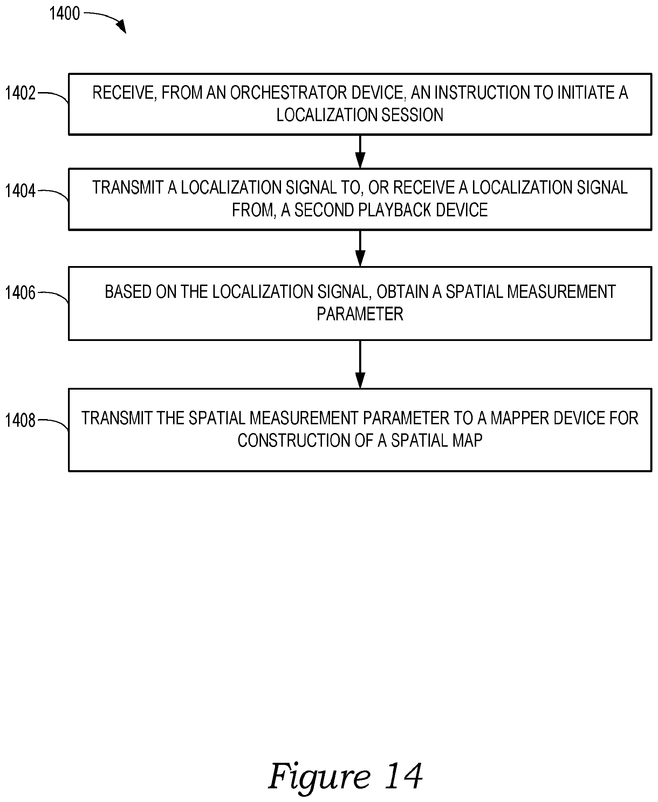

Figure 14 illustrates a process 1400 for conducting a localization session via a session participant device. In block 1402, a first playback device (i.e., a localization session participant) receives, from an orchestrator device, an instruction to initiate a localization session. In block 1404, the first playback device transmits a localization signal to, or receives a localization signal from, a second playback device. For example, if the first playback device is designated as a session manager, the first playback device can transmit the localization signal. Alternatively, if the first playback device is designed as a session managee, the first playback device can be configured to receive the localization signal. In various examples, the localization signal can take the form of a wireless electromagnetic signal (e.g., WI-FI, UWB, laser, etc.), a sound signal (e.g., an audible or ultrasonic sound signal), or other suitable localization signal.

In block 1406, a spatial measurement parameter is obtained based at least in part on the localization signal. The spatial measurement parameter can include one or more of: an absolute distance between the first and second playback devices, a relative distance between the first and second playback devices, an angular orientation between the first and second playback devices, or any combination thereof. The process 1400 continues in block 1408 with transmitting the spatial measurement parameter to a mapper device for construction of a spatial map. This transmission can be carried out via a network interface over, for example, a local area network and/or a wide area network. The mapper device can be on the local network (e.g., another playback device within the environment) or may reside in one or more remote computing devices (e.g., cloud-based servers). The spatial map can then be constructed and maintained via the mapper device, and optionally may be broadcast to other devices of the MPS and/or one or more remote computing devices.

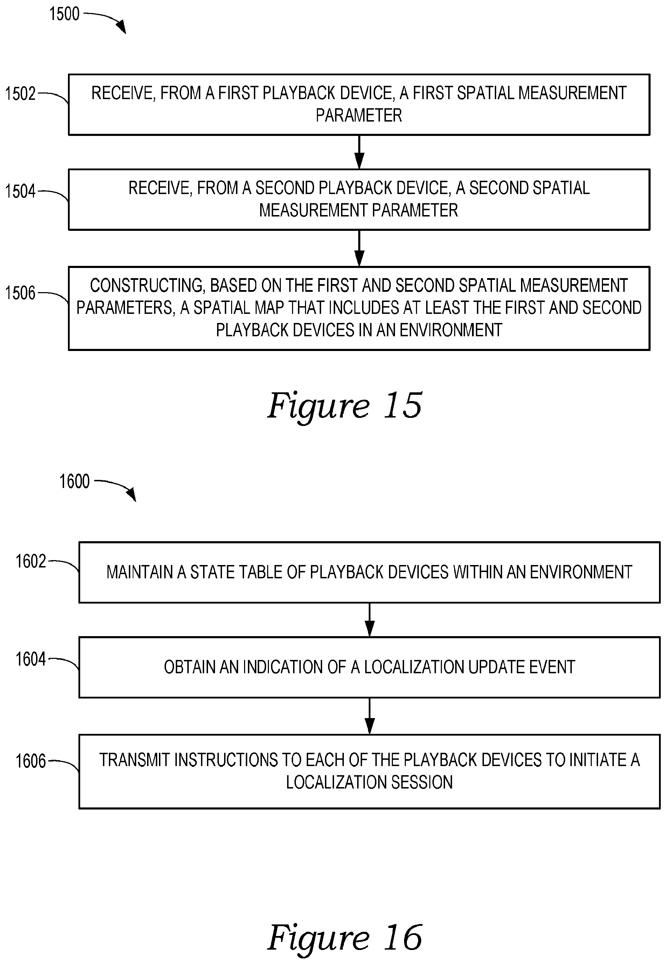

Figure 15 illustrates an example process 1500 for constructing a spatial map via a mapper device. The process 1500 begins in block 1502 with receiving, from a first playback device, a first spatial measurement parameter. In block 1502, the process 1500 involves receiving, from a second playback device, a second spatial measurement parameter. The spatial measurement parameters can include one or more of: an absolute or relative distance between the first and second playback devices and/or between the devices and any other devices within the environment, an angular orientation between the first and second playback devices and/or any other devices within the environment, or any combination thereof. In block 1506, a mapper device constructs, based at least in part on the first and second spatial measurement parameter, a spatial map that includes at least the first and second playback devices within an environment. This spatial map can be maintained via the mapper device and/or can be broadcast to other devices of the MPS and/or one or more remote computing devices. In various examples, the mapper device can also be the first playback device, the second playback device, or any other suitable device within the environment.

Figure 16 illustrates an example process 1600 for managing spatial mapping via an orchestrator device. The process 1600 begins in block 1602 with maintaining a state table of playback devices (and optionally other devices) within an environment. In block 1604, the orchestrator device obtains an indication of a localization update event. For example, localization updates may be performed periodically via scheduling, in response to a user instruction (e.g., via voice input or an interface of a controller device). Additionally or alternatively, a localization update event can include an indication that one or more devices have moved (e.g., based on accelerometer or other motion-sensor data carried by a device), that one or more devices have been removed from the environment, that one or more devices have been added to the environment, or an indication that acoustic properties of an environment have changed (e.g., the room impulse response has shifted significantly). In these and various other examples, the orchestrator device may initiate an update of the spatial mapping based on particular inputs or parameters.

In block 1606, the orchestrator device transmits instructions to each of the playback devices (and optionally other devices) to initiate a localization session. In some examples, the instructions can be tailored to each playback device, such that the localization sessions are coordinated and scheduled in a manner that avoids crosstalk and promotes consensus between the devices regarding spatial measurements obtained during the localization session(s). In some examples, the state table maintained by the orchestrator device can also include localization information, and in such cases the state table can be updated based on the output of the localization session(s) and/or the resulting spatial map generated by the mapper device. In various examples, the orchestrator device can also be one of the playback devices participating in a localization session, or any other suitable device within the environment.

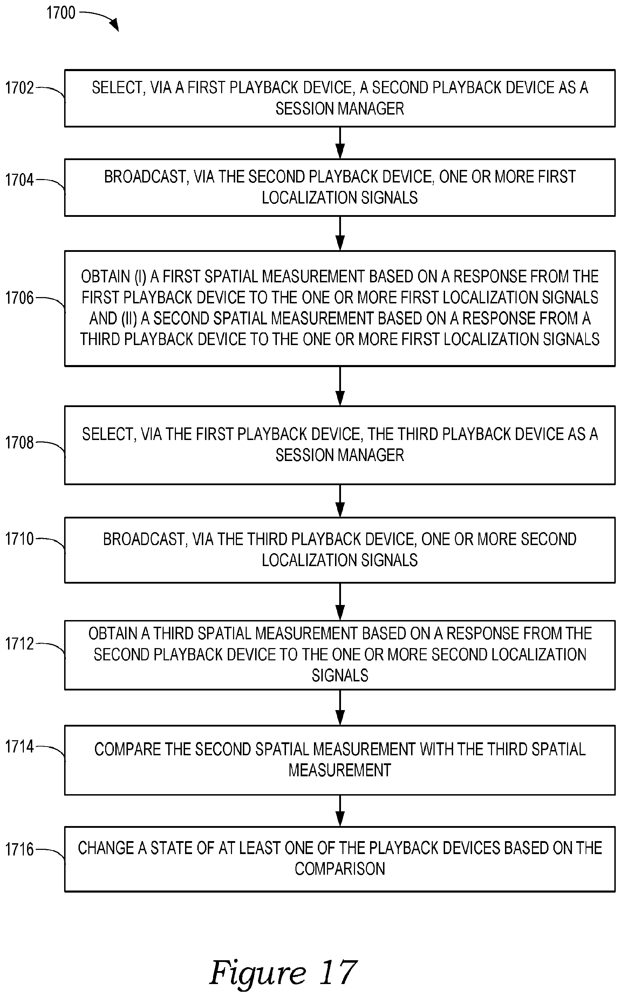

Figure 17 illustrates an example process 1700 for changing a device state in response to spatial measurements. In block 1702, the process 1700 involves selecting, via a first playback device, a second playback device as a session manager. For example, the first playback device can serve as the orchestrator device, and the second playback device can be designated the localization session manager. In block 1704, the second playback device broadcasts one or more first localization signal. In various examples, the localization signal can take the form of a wireless electromagnetic signal (e.g., WI-FI, UWB, laser, etc.), a sound signal (e.g., an audible or ultrasonic sound signal), or other suitable localization signal.

In block 1706, the process 1700 involves obtaining (i) a first spatial measurement based on a response from the first playback device to the one or more first localization signals, and (ii) a second spatial measurement based on a response from a third playback device to the one or more first localization signals. These spatial measurement can include distances (absolute or relative) between the second playback device and the first and third playback devices, and/or angular orientation between the devices.

In block 1708, the third playback device is selected, via the first playback device, as a session manager. For example, the first playback device, serving as the orchestrator device, can instruct the third playback device to serve as the localization session manager for the next localization session. As such, in block 1710, the third playback device broadcasts one or more second localization signals. In block 1712, a third spatial measurement is obtained based on a response from the second playback device to the one or more second localization signals.

At this stage, the process 1700 has obtained two spatial measurements between the second and third playback devices: the second spatial measurement obtained in block 1706 and the third spatial measurement obtained in block 1712. In block 1714, these two measurements are compared with one another, and in block 1716, a state of at least one of the playback devices is changed based on the comparison. For example, if the third spatial measurement, which is obtained after the second spatial measurement, indicates a greater distance then the second spatial measurement, this may reflect that that one or both of the second and third playback devices have been moved within the environment. Alternatively, this may indicate that the environment has changed in a manner that obstructs or obscures the localization signals (e.g., people have crowded in the room, thereby interfering with the localization signals). As a result, a state of one of the playback devices can be changed. For example, the device(s) can be grouped or ungrouped for synchronous playback, can be designated as an input or output device for user voice interactions, audio playback parameters can be changed (e.g., EQ, calibration, etc.), or any other suitable state change.

### IV. Conclusion

The description above discloses, among other things, various example systems, methods, apparatus, and articles of manufacture including, among other components, firmware and/or software executed on hardware. It is understood that such examples are merely illustrative and should not be considered as limiting. For example, it is contemplated that any or all of the firmware, hardware, and/or software aspects or components can be embodied exclusively in hardware, exclusively in software, exclusively in firmware, or in any combination of hardware, software, and/or firmware. Accordingly, the examples provided are not the only way(s) to implement such systems, methods, apparatus, and/or articles of manufacture.

The specification is presented largely in terms of illustrative environments, systems, procedures, steps, logic blocks, processing, and other symbolic representations that directly or indirectly resemble the operations of data processing devices coupled to networks. These process descriptions and representations are typically used by those skilled in the art to most effectively convey the substance of their work to others skilled in the art. Numerous specific details are set forth to provide a thorough understanding of the present disclosure. However, it is understood to those skilled in the art that certain examples of the present disclosure can be practiced without certain, specific details. In other instances, well known methods, procedures, components, and circuitry have not been described in detail to avoid unnecessarily obscuring aspects of the examples. Accordingly, the scope of the present invention is defined by the appended claims rather than the forgoing description of examples.

When any of the appended claims are read to cover a purely software and/or firmware implementation, at least one of the elements in at least one example is hereby expressly defined to include a tangible, non-transitory medium such as a memory, DVD, CD, Blu-ray, and so on, storing the software and/or firmware.

## Claims

1. A method (1700) comprising:
selecting, (1702) via a first playback device (102, 750, 760, 770) of a media playback system (100), a second playback device (102) as a session manager;
after selecting the second playback device, broadcasting (1704), via the second playback device, one or more first localization signals;
obtaining (1706) (i) a first spatial measurement based on a response from the first playback device to the one or more first localization signals and (ii) a second spatial measurement based on a response from a third playback device to the one or more first localization signals;
selecting (1708), via the first playback device, the third playback device as a session manager;
after selecting the third playback device, broadcasting (1710), via the third playback device, one or more second localization signals;
obtaining (1712) a third spatial measurement based on a response from the second playback device to the one or more second localization signals;
comparing (1714) the second spatial measurement with the third spatial measurement; and
changing (1716) a state of at least one of the playback devices based on the comparison.

2. The method of claim 1, further comprising:
measuring characteristics of wireless signals transmitted via signal paths between each of a plurality of reference devices over a period of time, wherein the plurality of reference devices comprises at least two of the first, second, and third playback devices;
measuring characteristics of wireless signals transmitted via signal paths between a fourth playback device and each of the plurality of reference devices;
normalizing the measurements to estimate characteristics of the signal paths between each of the plurality of reference devices and between the fourth playback device and each of the reference devices;
estimating the likelihood that the fourth playback device is in a relative location using the estimated characteristics of the signal paths between each of the plurality of reference devices and the estimated characteristics of the signal paths between the fourth playback device and each of the plurality of reference devices; and
updating a spatial map to include a location of the fourth playback device relative to each of the plurality of reference devices.

3. The method of claim 1 or claim 2, further comprising:
broadcasting, via the third playback device, a sound signal;
detecting the sound signal via the first playback device, wherein the second playback device does not detect the sound signal; and
updating a spatial map to indicate that the first playback device detected the sound signal.

4. The method of any one of claims 1 to 3, wherein the first and second localization signals are ultra-wideband signals.

5. The method of any one of claims 1 to 4, wherein the first and second spatial measurements are one or more of:
an absolute distance between the second playback device and the first and third playback devices;
a relative distance between the second playback device and the first and third playback devices; and
an angular orientation between the second playback device and the first and third playback devices.

6. The method of any one of claims 1 to 5, wherein changing the state of at least one playback device comprises one or more of: grouping or ungrouping a playback device for synchronous playback, changing an EQ setting of the at least one playback device, or designating the at least one playback device for user voice control input or output.

7. The method of any one of claims 1 to 6, further comprising transmitting the first, second, and third spatial measurements to a mapper device for construction of a spatial map.

8. The method of claim 7, wherein the spatial map comprises features of the environment in addition to the relative positions of the first, second, and third playback devices.

9. A system comprising:
at least one processor (212, 412, 702); and
at least one computer-readable medium (213, 413, 706) storing program instructions that are executable by the at least one processor such that a plurality of playback devices (102, 750, 760, 770) of a media playback system (100) are configured to perform operations comprising the method of any one of claims 1 to 8.

10. A computer-readable medium (213, 413, 706) storing instructions that, when executed by at least one processor (212, 412, 702), cause a plurality of playback devices (102, 750, 760, 770) of a media playback system to perform operations comprising the method of any one of claims 1 to 8.

## Patentansprüche

1. Verfahren (1700), umfassend:
Auswählen (1702), über eine erste Wiedergabevorrichtung (102, 750, 760, 770) eines Medienwiedergabesystems (100), einer zweiten Wiedergabevorrichtung (102) als einen Sitzungsmanager;
nach dem Auswählen der zweiten Wiedergabevorrichtung, Senden (1704), über die zweite Wiedergabevorrichtung, eines oder mehrerer erster Lokalisierungssignale;
Erhalten (1706) (i) einer ersten räumlichen Messung basierend auf einer Antwort von der ersten Wiedergabevorrichtung auf das eine oder die mehreren ersten Lokalisierungssignale und (ii) einer zweiten räumlichen Messung basierend auf einer Antwort von einer dritten Wiedergabevorrichtung auf das eine oder die mehreren ersten Lokalisierungssignale;
Auswählen (1708), über die erste Wiedergabevorrichtung, der dritten Wiedergabevorrichtung als einen Sitzungsmanager;
nach dem Auswählen der dritten Wiedergabevorrichtung, Senden (1710), über die dritte Wiedergabevorrichtung, eines oder mehrerer zweiter Lokalisierungssignale;
Erhalten (1712) einer dritten räumlichen Messung basierend auf einer Antwort von der zweiten Wiedergabevorrichtung auf das eine oder die mehreren zweiten Lokalisierungssignale;
Vergleichen (1714) der zweiten räumlichen Messung mit der dritten räumlichen Messung; und
Ändern (1716) eines Zustands mindestens einer der Wiedergabevorrichtungen basierend auf dem Vergleich.

2. Verfahren nach Anspruch 1, ferner umfassend:
Messen von Eigenschaften drahtloser Signale, die über Signalpfade zwischen jeder einer Vielzahl von Referenzvorrichtungen über einen Zeitraum übertragen werden, wobei die Vielzahl von Referenzvorrichtungen mindestens zwei der ersten, der zweiten und der dritten Wiedergabevorrichtungen umfasst;
Messen von Eigenschaften drahtloser Signale, die über Signalpfade zwischen einer vierten Wiedergabevorrichtung und jeder der Vielzahl von Referenzvorrichtungen übertragen werden;
Normieren der Messungen, um Eigenschaften der Signalpfade zwischen jeder der Vielzahl von Referenzvorrichtungen und zwischen der vierten Wiedergabevorrichtung und jeder der Referenzvorrichtungen zu schätzen;
Schätzen der Wahrscheinlichkeit, dass sich die vierte Wiedergabevorrichtung an einem relativen Standort befindet, unter Verwendung der geschätzten Eigenschaften der Signalpfade zwischen jeder der Vielzahl von Referenzvorrichtungen und den geschätzten Eigenschaften der Signalpfade zwischen der vierten Wiedergabevorrichtung und jeder der Vielzahl von Referenzvorrichtungen; und
Aktualisieren einer räumlichen Karte, um einen Standort der vierten Wiedergabevorrichtung relativ zu jeder der Vielzahl von Referenzvorrichtungen einzuschließen.

3. Verfahren nach Anspruch 1 oder 2, ferner umfassend:
Senden, über die dritte Wiedergabevorrichtung, eines Tonsignals;
Erfassen des Tonsignals über die erste Wiedergabevorrichtung, wobei die zweite Wiedergabevorrichtung das Tonsignal nicht erfasst; und
Aktualisieren einer räumlichen Karte, um anzuzeigen, dass die erste Wiedergabevorrichtung das Tonsignal erfasst.

4. Verfahren nach einem der Ansprüche 1 bis 3, wobei das erste und das zweite Lokalisierungssignal Ultrabreitbandsignale sind.

5. Verfahren nach einem der Ansprüche 1 bis 4, wobei die erste und die zweite räumliche Messung eines oder mehrere sind von:
einem absoluten Abstand zwischen der zweiten Wiedergabevorrichtung und der ersten und der dritten Wiedergabevorrichtung;
einem relativen Abstand zwischen der zweiten Wiedergabevorrichtung und der ersten und der dritten Wiedergabevorrichtung; und
einer Winkelausrichtung zwischen der zweiten Wiedergabevorrichtung und der ersten und der dritten Wiedergabevorrichtung.

6. Verfahren nach einem der Ansprüche 1 bis 5, wobei das Ändern des Zustands mindestens einer Wiedergabevorrichtung eines oder mehrere umfasst von: Gruppieren oder Aufheben einer Gruppierung einer Wiedergabevorrichtung für eine synchrone Wiedergabe, Ändern einer EQ-Einstellung der mindestens einen Wiedergabevorrichtung oder Designieren der mindestens einen Wiedergabevorrichtung für eine Benutzersprachsteuerungseingabe oder - ausgabe.

7. Verfahren nach einem der Ansprüche 1 bis 6, ferner umfassend das Übertragen der ersten, der zweiten und der dritten räumlichen Messung an eine Kartierungsvorrichtung für eine Erstellung einer räumlichen Karte.

8. Verfahren nach Anspruch 7, wobei die räumliche Karte zusätzlich zu den relativen Positionen der ersten, der zweiten und der dritten Wiedergabevorrichtung Merkmale der Umgebung umfasst.

9. System, umfassend:
mindestens einen Prozessor (212, 412, 702); und
mindestens ein computerlesbares Medium (213, 413, 706), das Programmanweisungen speichert, die durch den mindestens einen Prozessor derart ausführbar sind, dass eine Vielzahl von Wiedergabevorrichtungen (102, 750, 760, 770) eines Medienwiedergabesystems (100) konfiguriert sind, um Vorgänge, umfassend das Verfahren nach einem der Ansprüche 1 bis 8, durchzuführen.

10. Computerlesbares Medium (213, 413, 706), das Anweisungen speichert, die, wenn sie durch mindestens einen Prozessor (212, 412, 702) ausgeführt werden, eine Vielzahl von Wiedergabevorrichtungen (102, 750, 760, 770) eines Medienwiedergabesystems veranlassen, Vorgänge, umfassend das Verfahren nach einem der Ansprüche 1 bis 8, durchzuführen.

## Revendications

1. Procédé (1700) comprenant :
la sélection, (1702) par l'intermédiaire d'un premier dispositif de lecture (102, 750, 760, 770) d'un système de lecture de médias (100), d'un deuxième dispositif de lecture (102) en tant que gestionnaire de session ;
après la sélection du deuxième dispositif de lecture, la diffusion (1704), par l'intermédiaire du deuxième dispositif de lecture, d'un ou plusieurs premiers signaux de localisation ;
l'obtention (1706) (i) d'une première mesure spatiale basée sur une réponse du premier dispositif de lecture au ou aux premiers signaux de localisation, et (ii) d'une deuxième mesure spatiale basée sur une réponse d'un troisième dispositif de lecture au ou aux premiers signaux de localisation ;
la sélection (1708), par l'intermédiaire du premier dispositif de lecture, du troisième dispositif de lecture en tant que gestionnaire de session ;
après la sélection du troisième dispositif de lecture, la diffusion (1710), par l'intermédiaire du troisième dispositif de lecture, d'un ou plusieurs seconds signaux de localisation ;
l'obtention (1712) d'une troisième mesure spatiale basée sur une réponse du deuxième dispositif de lecture au ou aux seconds signaux de localisation ;
la comparaison (1714) de la deuxième mesure spatiale à la troisième mesure spatiale ; et
le changement (1716) d'un état d'au moins l'un des dispositifs de lecture sur la base de la comparaison.

2. Procédé selon la revendication 1, comprenant en outre :
la mesure de caractéristiques de signaux sans fil transmis par l'intermédiaire de trajets de signaux entre chacun d'une pluralité de dispositifs de référence sur une période de temps, dans lequel la pluralité de dispositifs de référence comprend au moins deux parmi les premier, deuxième, et troisième dispositifs de lecture ;
la mesure de caractéristiques de signaux sans fil transmis par l'intermédiaire de trajets de signaux entre un quatrième dispositif de lecture et chacun de la pluralité de dispositifs de référence ;
la normalisation des mesures pour estimer des caractéristiques des trajets de signaux entre chacun de la pluralité de dispositifs de référence et entre le quatrième dispositif de lecture et chacun des dispositifs de référence ;
l'estimation de la probabilité que le quatrième dispositif de lecture se trouve dans un emplacement relatif à l'aide des caractéristiques estimées des trajets de signaux entre chacun de la pluralité de dispositifs de référence et des caractéristiques estimées des trajets de signaux entre le quatrième dispositif de lecture et chacun de la pluralité de dispositifs de référence ; et
la mise à jour d'une carte spatiale pour inclure un emplacement du quatrième dispositif de lecture par rapport à chacun de la pluralité de dispositifs de référence.

3. Procédé selon la revendication 1 ou la revendication 2, comprenant en outre :
la diffusion, par l'intermédiaire du troisième dispositif de lecture, d'un signal sonore ;
la détection du signal sonore par l'intermédiaire du premier dispositif de lecture, dans lequel le deuxième dispositif de lecture ne détecte pas le signal sonore ; et
la mise à jour d'une carte spatiale pour indiquer que le premier dispositif de lecture a détecté le signal sonore.

4. Procédé selon l'une quelconque des revendications 1 à 3, dans lequel les premiers et seconds signaux de localisation sont des signaux à bande ultra-large.

5. Procédé selon l'une quelconque des revendications 1 à 4, dans lequel les première et deuxième mesures spatiales sont l'une ou plusieurs parmi :
une distance absolue entre le deuxième dispositif de lecture et les premier et troisième dispositifs de lecture ;
une distance relative entre le deuxième dispositif de lecture et les premier et troisième dispositifs de lecture ; et
une orientation angulaire entre le deuxième dispositif de lecture et les premier et troisième dispositifs de lecture.

6. Procédé selon l'une quelconque des revendications 1 à 5, dans lequel le changement d'état d'au moins un dispositif de lecture comprend l'un ou plusieurs parmi : le regroupement ou le dégroupement d'un dispositif de lecture pour une lecture synchrone, la modification d'un réglage d'égalisation de l'au moins un dispositif de lecture, ou la désignation de l'au moins un dispositif de lecture pour une entrée ou une sortie de commande vocale d'utilisateur.

7. Procédé selon l'une quelconque des revendications 1 à 6, comprenant en outre la transmission des première, deuxième et troisième mesures spatiales à un dispositif de cartographie pour la construction d'une carte spatiale.

8. Procédé selon la revendication 7, dans lequel la carte spatiale comprend des caractéristiques de l'environnement en plus des positions relatives des premier, deuxième et troisième dispositifs de lecture.

9. Système comprenant :
au moins un processeur (212, 412, 702) ; et
au moins un support lisible par un ordinateur (213, 413, 706) stockant des instructions de programme qui sont exécutables par l'au moins un processeur de manière qu'une pluralité de dispositifs de lecture (102, 750, 760, 770) d'un système de lecture de médias (100) soit configurée pour effectuer des opérations comprenant le procédé selon l'une quelconque des revendications 1 à 8.

10. Support lisible par un ordinateur (213, 413, 706) stockant des instructions qui, lorsqu'elles sont exécutées par au moins un processeur (212, 412, 702), amènent une pluralité de dispositifs de lecture (102, 750, 760, 770) d'un système de lecture de médias à effectuer des opérations comprenant le procédé selon l'une quelconque des revendications 1 à 8.
